(19) Europäisches Patentamt
European Patent Office
Office européen des brevets

(11) **EP 4 580 086 A1**

(12) **EUROPEAN PATENT APPLICATION**
published in accordance with Art. 153(4) EPC

(43) Date of publication:
02.07.2025 Bulletin 2025/27

(21) Application number: 23857202.8

(22) Date of filing: 09.08.2023

(51) International Patent Classification (IPC):
H04B 10/11 (2013.01)   H04B 10/80 (2013.01)
H04W 36/30 (2009.01)   H04W 48/16 (2009.01)
H04W 76/10 (2018.01)   H04W 84/00 (2009.01)
H04W 88/02 (2009.01)

(52) Cooperative Patent Classification (CPC):
H04B 10/11; H04B 10/80; H04W 36/30;
H04W 48/16; H04W 76/10; H04W 84/00;
H04W 88/02

(86) International application number:
PCT/JP2023/029025

(87) International publication number:
WO 2024/043089 (29.02.2024 Gazette 2024/09)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 26.08.2022 JP 2022134686
26.10.2022 JP 2022171108

(71) Applicant: Kyocera Corporation
Kyoto-shi, Kyoto 612-8501 (JP)

(72) Inventor: ADACHI, Hiroyuki
Kyoto-shi, Kyoto 612-8501 (JP)

(74) Representative: Viering, Jentschura & Partner
mbB
Patent- und Rechtsanwälte
Am Brauhaus 8
01099 Dresden (DE)

(54) **OPTICAL COMMUNICATION SYSTEM, TERMINAL DEVICE, AND BASE STATION DEVICE**

(57)   A light communication system includes a base station apparatus and a terminal apparatus configured to perform light communication with the base station apparatus. The base station apparatus and/or the terminal apparatus is configured to perform connection control that establishes and/or maintains light communication connection between the terminal apparatus and the base station apparatus in such a manner that communication quality of the light communication in an uplink is prioritized over communication quality of the light communication in a downlink.

FIG. 1

**Description**

TECHNICAL FIELD

The present disclosure relates to a light communication system, a terminal apparatus, and a base station apparatus.

BACKGROUND OF INVENTION

A known light communication system uses light (visible light in particular) as a transmission medium for communication in water, for example. Since light has high directivity, a conventional light communication system generally performs one-to-one communication with a transmission side and a reception side facing each other on the assumption that a light communication apparatus of the transmission side and a light communication apparatus of the reception side are fixed.

CITATION LIST

PATENT LITERATURE

Patent Document 1: JP 4-103232 A

SUMMARY

In a first aspect, a light communication system includes a base station apparatus; and a terminal apparatus configured to perform light communication with the base station apparatus. The base station apparatus and/or the terminal apparatus is configured to perform connection control that establishes and/or maintains light communication connection between the terminal apparatus and the base station apparatus in such a manner that communication quality of the light communication in an uplink is prioritized over communication quality of the light communication in a downlink.

In a second aspect, a terminal apparatus includes a light communicator configured to perform light communication with a base station apparatus; and a controller configured to perform connection control that establishes and/or maintains light communication connection between the terminal apparatus and the base station apparatus in such a manner that communication quality of the light communication in an uplink is prioritized over communication quality of the light communication in a downlink.

In a third aspect, a base station apparatus includes a light communicator configured to perform light communication with a terminal apparatus; and a controller configured to perform connection control that establishes and/or maintains light communication connection between the terminal apparatus and the base station apparatus in such a manner that communication quality of the light communication in an uplink is prioritized over communication quality of the light communication in a downlink.

In a fourth aspect, a light communication system is a light communication system configured to perform light communication between a base station apparatus and a terminal apparatus, and includes a plurality of base station apparatuses that are three-dimensionally arranged underwater at intervals in a horizontal direction and a vertical direction. A communication area formed underwater by each of the plurality of base station apparatuses is configured to form a coverage area of the light communication in the light communication system.

BRIEF DESCRIPTION OF THE DRAWINGS

FIG. 1 is a diagram illustrating a configuration example of a light communication system according to an embodiment.
FIG. 2 is a diagram schematically illustrating a transmission operation in an uplink (UL) of a terminal apparatus according to the embodiment.
FIG. 3 is a diagram illustrating a block configuration example of the base station apparatus according to the embodiment.
FIG. 4 is a diagram illustrating an outer appearance configuration example of the base station apparatus according to the embodiment.
FIG. 5 is a diagram illustrating a first variation of the outer appearance configuration example of the base station apparatus according to the embodiment.
FIG. 6 is a diagram illustrating a second variation of the outer appearance configuration example of the base station apparatus according to the embodiment.

FIG. 7 is a diagram illustrating a block configuration example of the terminal apparatus according to the embodiment.

FIG. 8 is a diagram illustrating an outer appearance configuration example of the terminal apparatus according to the embodiment.

FIG. 9 is a diagram illustrating the first variation of the outer appearance configuration example of the terminal apparatus according to the embodiment.

FIG. 10 is a diagram illustrating a second variation of an outer appearance configuration example of the terminal apparatus according to the embodiment.

FIG. 11 is a diagram illustrating downlink (DL) communication that is an example of light communication according to the embodiment.

FIG. 12 is a diagram illustrating a configuration example of a communication frame used in the light communication system according to the embodiment.

FIG. 13 is a diagram for explaining an influence of solar noise in the light communication system according to the embodiment.

FIG. 14 is a diagram for explaining an influence of ambient light in the light communication system according to the embodiment.

FIG. 15 is a diagram for explaining an estimation operation of UL communication quality performed by the terminal apparatus according to the embodiment.

FIG. 16 is a diagram for explaining an operation of selecting a light communicator for noise estimation in the terminal apparatus according to the embodiment.

FIG. 17 is a diagram illustrating an example of an operation flow of the terminal apparatus according to the first embodiment.

FIG. 18 is a diagram for explaining an operation according to a first variation of the first embodiment.

FIG. 19 is a diagram for explaining an operation according to a second variation of the first embodiment.

FIG. 20 is a diagram illustrating an example of an operation flow of the terminal apparatus according to the second variation of the first embodiment.

FIG. 21 is a diagram illustrating an example of an operation sequence of a light communication system 1 according to a third variation of the first embodiment.

FIG. 22 is a diagram illustrating an example of an operation sequence of the light communication system according to a second embodiment.

FIG. 23 is a diagram illustrating an example of an operation sequence of the light communication system according to a variation of the second embodiment.

FIG. 24 is a diagram illustrating a configuration example of the light communication system according to a third embodiment.

FIG. 25 is a diagram illustrating a configuration example of a base station group according to the third embodiment.

FIG. 26 is a diagram for explaining ground station design of the light communication system according to the third embodiment.

FIG. 27 is a diagram for explaining the ground station design of the light communication system according to the third embodiment.

FIG. 28 is a diagram for explaining the ground station design of the light communication system according to the third embodiment.

FIG. 29 is a diagram for explaining the ground station design of the light communication system according to the third embodiment.

FIG. 30 is a diagram for explaining support for movement of the base station apparatus in a horizontal direction according to the third embodiment.

FIG. 31 is a diagram illustrating a configuration example of a functional block of a control apparatus according to the third embodiment.

FIG. 32 is a diagram for explaining an operation of specifying a communication distance of light communication of the base station apparatus according to the third embodiment.

FIG. 33 is a diagram for explaining an operation of calculating an inter-base station distance according to the third embodiment.

FIG. 34 is a diagram for explaining a dead zone adjustment amount in a vertical direction according to the third embodiment.

FIG. 35 is a diagram for explaining a dead zone adjustment amount in the horizontal direction according to the third embodiment.

FIG. 36 is a diagram illustrating a flow example at a time of initial configuration of each base station apparatus according to the third embodiment.

FIG. 37 explains an operation according to a first variation of the third embodiment.

FIG. 38 is a diagram illustrating a first configuration pattern of the inter-base station distance according to the first variation of the third embodiment.

FIG. 39 is a diagram illustrating a second configuration pattern of the inter-base station distance according to the first variation of the third embodiment.

FIG. 40 is a diagram illustrating a configuration example of the control apparatus according to the first variation of the third embodiment.

FIG. 41 is a diagram illustrating a third configuration pattern of the inter-base station distance according to the first variation of the third embodiment.

FIG. 42 is a diagram illustrating an operation example of the light communication system according to a second variation of the third embodiment.

FIG. 43 is a diagram illustrating an operation example of the light communication system according to a third variation of the third embodiment.

DESCRIPTION OF EMBODIMENTS

It is assumed that future light communication systems implement light communication between a plurality of terminal apparatuses and a base station apparatus similarly to wireless communication by radio waves on the ground.

Hence, the present disclosure provides a light communication system, a terminal apparatus, and a base station apparatus that enable appropriate light communication between the terminal apparatus and the base station apparatus.

A light communication system according to embodiments will be described with reference to the drawings. In the description of the drawings, the same or similar parts are denoted by the same or similar reference signs.

In the embodiments, the light communication system is a system that performs light communication using visible light as an example of light. In this regard, the light communication system may be a system that performs light communication using light such as infrared light other than visible light. In the embodiments, the light communication system is a system that performs light communication underwater. In this regard, the light communication system is not limited to a system that performs light communication underwater, and may be a system that performs light communication in, for example, space.

First Embodiment

First, a configuration of a light communication system according to the first embodiment will be described.

It is assumed that the future light communication systems implement light communication between a plurality of terminal apparatuses and a base station apparatus similarly to wireless communication by radio waves on the ground. Under such an assumption, it is desired to implement connection control for appropriately establishing and/or maintaining light communication connection between the terminal apparatus and the base station apparatus.

According to wireless communication using radio waves, connection control is performed based on a reception strength of a radio wave in a downlink (DL) received by a terminal apparatus from a base station apparatus. However, it is concerned that, according to such connection control that prioritizes downlink communication quality, the terminal apparatus cannot establish and/or maintain light communication connection with an appropriate base station apparatus in the light communication system.

In the first embodiment, the light communication system, the terminal apparatus, and the base station apparatus that enable appropriate establishment and/or maintenance of light communication connection will be described.

Configuration Example of Light Communication System

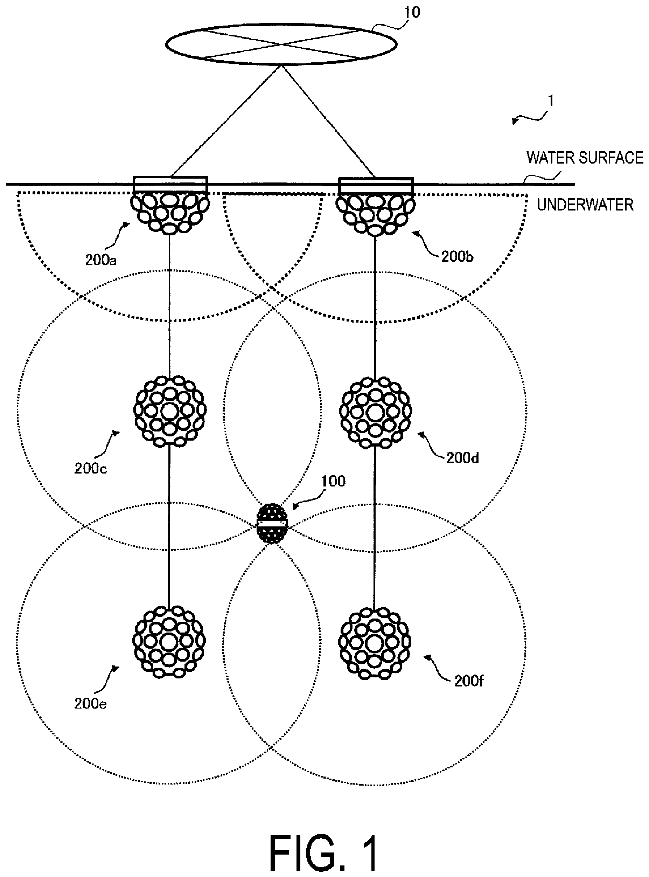

FIG. 1 is a diagram illustrating a configuration example of a light communication system 1 according to the present embodiment. The light communication system 1 includes a terminal apparatus 100 and a plurality of base station apparatuses 200 (200a to 200f). In this regard, the number of the terminal apparatuses 100 and the number of the base station apparatuses 200 are not limited to those in the illustrated example.

The terminal apparatus 100 is an example of a light communication apparatus. Each base station apparatus 200 is another example of a light communication apparatus. Each of the terminal apparatus 100 and the plurality of base station apparatuses 200 includes a plurality of light communicators whose optical axes (directivities of light communication from another viewpoint) are directed toward different directions. Thus, each of the terminal apparatus 100 and the plurality of base station apparatuses 200 can perform light communication for various methods (all directions) using the plurality of light communicators while using light as a transmission medium.

For each terminal apparatus 100 connected to the base station apparatus 200, the base station apparatus 200 selects an own light communicator associated with the direction of the terminal apparatus 100, and performs light communication with the terminal apparatus 100 using the selected light communicator. Similarly, the terminal apparatus 100 selects an own light communicator associated with the direction of the base station apparatus 200 that is a serving base station (connection destination base station apparatus) of the terminal apparatus 100, and performs light communication with the base station apparatus 200 using the selected light communicator.

To form a wide communication area underwater without depending on the position and the orientation of the terminal apparatus 100, the plurality of base station apparatuses 200 are three-dimensionally arranged underwater. For example, each base station apparatus 200 may be temporarily installed during a period during which an investigation is performed underwater using the terminal apparatus 100. FIG. 1 illustrates a communication area of each base station apparatus 200 as a broken line. The communication area of each base station apparatus 200 will be also referred to as a cell.

Each of the base station apparatuses 200a and 200b is near a water surface, and fixed to, for example, a buoy. Each of the base station apparatuses 200a and 200b has a housing of a hemispherical shape, and a plurality of light communicators is arranged in an array on the surface of the housing of the hemispherical shape. Each of the base station apparatuses 200a and 200b is communicably connected with a network 10 via a backhaul line. The backhaul line may be a wireless line or may be a wired line. To efficiently secure a communication area underwater, the base station apparatuses 200a and 200b may be installed spaced a predetermined distance apart from each other.

The base station apparatus 200c is suspended from the base station apparatus 200a and with a rope and/or a cable (hereinafter referred to as a "cable or the like") interposed therebetween. The base station apparatus 200e is suspended from the base station apparatus 200c and with a cable or the like interposed therebetween. Similarly, the base station apparatus 200d is suspended from the base station apparatus 200b adjacent to the base station apparatus 200a and with a cable or the like interposed therebetween. The base station apparatus 200f is suspended from the base station apparatus 200d and with a cable or the like interposed therebetween. Each of the base station apparatuses 200c, 200d, 200e, and 200f has a housing of a spherical shape, and a plurality of light communicators is aligned in an array on the spherical shape of the housing.

The terminal apparatus 100 is underwater. The terminal apparatus 100 is configured to be movable underwater. For example, the terminal apparatus 100 may be the terminal apparatus 100 such as an underwater robot or an underwater drone that can autonomously run. The terminal apparatus 100 is connected to any one of the base station apparatuses 200, and performs light communication with the connection destination base station apparatus 200 (serving base station).

The terminal apparatus 100 may include a sensor such as an image sensor and generate sensor data. For example, each terminal apparatus 100 may transmit uplink (UL) data including the sensor data to the base station apparatus 200 (serving base station) by light communication. The terminal apparatus 100 may receive downlink (DL) data including instruction data from the base station apparatus 200 (serving base station) by light communication. The terminal apparatus 100 may move and perform a sensing operation (imaging or the like) based on the instruction data.

In the present embodiment, a scenario is assumed that large-capacity data such as video data is uploaded from the terminal apparatus 100 such as an underwater drone to the network 10 via the base station apparatus 200. In such a scenario, it is desired to improve communication quality of light communication in the UL compared to communication quality of light communication in the DL.

Note that each base station apparatus 200 may transmit a synchronization light signal and/or a reference light signal unique to each base station apparatus 200 in all directions from all light communicators. The terminal apparatus 100 may specify the direction of the base station apparatus 200 based on these light signals, specify the light communicator of the terminal apparatus 100 associated with the direction, and perform light communication with the base station apparatus 200 using the specified light communicator.

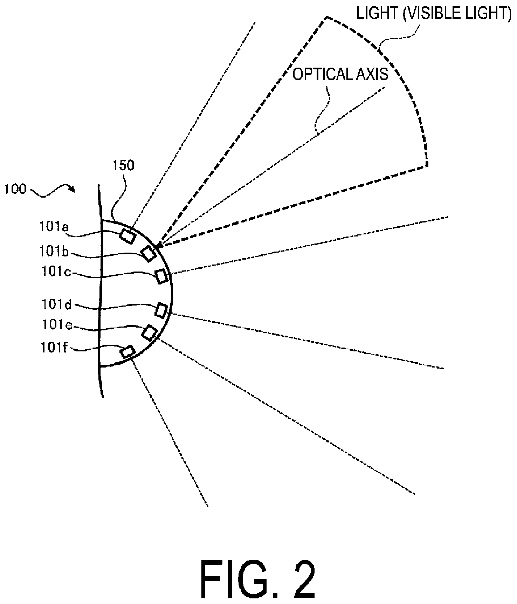

FIG. 2 is a diagram schematically illustrating a transmission operation of the terminal apparatus 100 in the UL according to the present embodiment.

In the terminal apparatus 100, for example, a plurality of light communicators 101 (light communicators 101a, 101b, and ...) is arranged in a transparent housing 150, and the light communicators 101 perform light communication with the base station apparatus 200 via the housing 150. The plurality of light communicators 101 is aligned in an array along a curved inner surface 2a of the housing 150, and have optical axes directed toward respectively different directions. For example, the optical axis of each light communicator 101 is directed toward a normal direction of the curved surface of the housing 150. Although light has high directivity, light communication in various directions can be performed by such a configuration.

Configuration Example of Base Station Apparatus

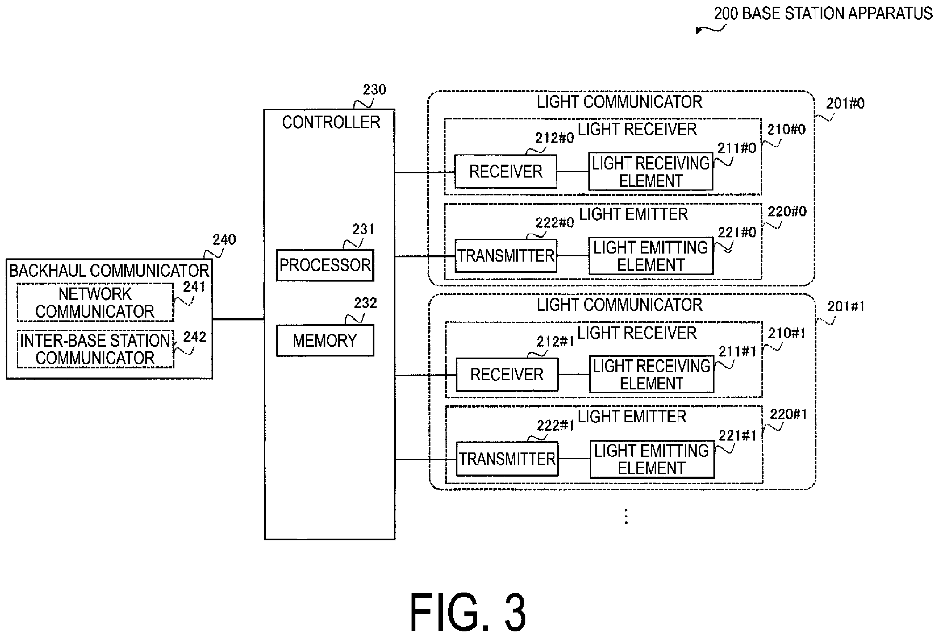

FIG. 3 is a diagram illustrating a block configuration example of the base station apparatus 200 according to the present embodiment. The base station apparatus 200 includes a plurality of light communicators 201 (201#0, 201#1, and ...), a controller 230, and a backhaul communicator 240. The base station apparatus 200 may include a battery for supplying electrical power necessary for the base station apparatus 200 to operate.

The plurality of light communicators 201 are arranged so that directivities (optical axes) of the light communication are directed toward respectively different directions. Each light communicator 201 performs light communication (visible light communication in the present embodiment) with the terminal apparatus 100 under control of the controller 230. Each light communicator 201 includes a light receiver 210 and a light emitter 220. Since each light communicator 201 is configured likewise, the configuration of the light communicator 201#0 will be described hereinafter.

A light receiver 210#0 of the light communicator 201#0 receives a light signal (a visible light signal in the present embodiment) from the terminal apparatus 100, and outputs the received signal to the controller 230. The light receiver 210#0 includes at least one light receiving element 211#0 and a receiver 212#0. The light receiving element 211#0 may include a Photo Diode (PD) and a peripheral circuit thereof. The light receiving element 211#0 receives a light signal, converts the received light signal into an electrical signal (received signal), and outputs the received signal to the receiver 212#0. The optical axis of the light receiving element 211#0 is directed toward a predetermined direction different from that of the optical axis of a different light receiving element 211 (e.g., light receiving element 211#1). The receiver 212#0 may include a Field Programmable Gate Array (FPGA) and/or a System-on-a-chip (SoC). The receiver 212#0 converts the received signal output by each light receiving element 211#0, performs signal processing on the converted received signal, and outputs the processed received signal to the controller 230. At least part of the receiver 212#0 may be integrated with a different receiver 212 (e.g., receiver 212#1) or may be integrated with a transmitter 222.

The light emitter 220#0 of the light communicator 201#0 transmits a light signal (a visible light signal in the present embodiment) to the terminal apparatus 100 under control of the controller 230. The light emitter 220#0 includes at least one light emitting element 221#0 and a transmitter 222#0. The light emitting element 221#0 may include a Laser Diode (LD) or a Light Emitting Diode (LED), and a peripheral circuit thereof. The light emitting element 221#0 converts an electrical signal (transmission signal) output by the transmitter 222#0 for light communication into a light signal, and transmits the light signal. The optical axis of the light emitting element 221#0 is directed toward a predetermined direction different from that of the optical axis of a different light emitting element 221 (e.g., light emitting element 221#1). In this regard, the optical axis of the light emitting element 221#0 is directed toward the same direction as that of the optical axis of the corresponding light receiving element 211#0. The transmitter 222#0 may include an FPGA and/or an SoC. The transmitter 222#0 performs signal processing on a transmission signal output by the controller 230, converts the signal after the signal processing, and outputs the signal to the light emitting element 221#0. At least part of the transmitter 222#0 may be integrated with a different transmitter 222 (e.g., transmitter 222#1) or may be integrated with the receiver 212.

The controller 230 controls an overall operation of the base station apparatus 200. The operation of the above-described base station apparatus 200 and a below-described operation of the base station apparatus 200 may be operations performed under control of the controller 230. For example, the controller 230 controls a plurality of light communicators 201. The controller 230 includes at least one processor 231 and at least one memory 232. The memory 232 stores a program to be executed by the processor 231 and information to be used for processing by the processor 231. The processor 231 may include a digital signal processor and a Central Processing Unit (CPU). The digital signal processor performs modulation and demodulation, coding and decoding, and the like on digital signals. The CPU executes the program stored in the memory and performs various types of processing. At least part of the controller 230 may be integrated with the receiver 212 or may be integrated with the transmitter 222.

The backhaul communicator 240 performs backhaul communication (wired communication and/or wireless communication) via a backhaul line under control of the controller 230. The backhaul communicator 240 may include a network communicator 241 that performs communication with the network 10 (e.g., core network), and an inter-base station communicator 242 that performs inter-base station communication with a neighboring base station. For example, the network communicator 241 receives from the network 10 data to be transmitted to the terminal apparatus 100, and outputs the received data to the controller 230. The network communicator 241 transmits to the network 10 the data received by the light communicator 201 from the terminal apparatus 100.

In the base station apparatus 200 configured as described above, the controller 230 performs connection control for establishing and/or maintaining light communication connection between the terminal apparatus 100 and the base station apparatus 200 so as to prioritize communication quality of light communication in the uplink (UL) over communication quality of light communication in the downlink (DL). Details of such connection control will be described below.

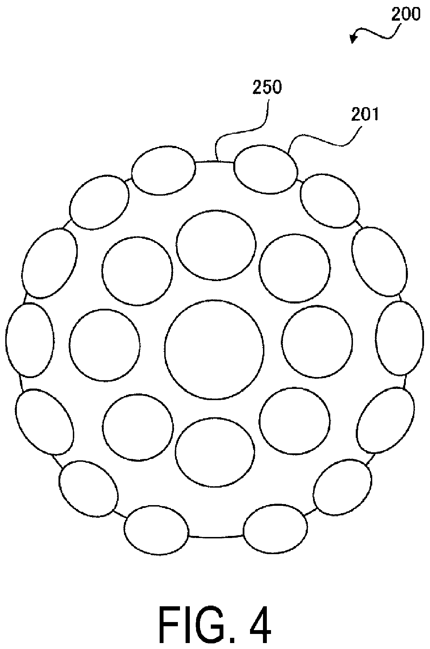

FIG. 4 is a diagram illustrating an outer appearance configuration example of the base station apparatus 200 according to the present embodiment.

The base station apparatus 200 includes a housing 250 of a spherical shape, and the plurality of light communicators 201 aligned in an array on a curved surface of the housing 250. In this regard, the housing 250 may be formed into a hemispherical shape. Each light communicator 201 is provided with a set of the at least one light receiving element 211 and the at least one light emitting element 221. Such a configuration enables the base station apparatus 200 to perform light communication with the terminal apparatuses 100 in various directions.

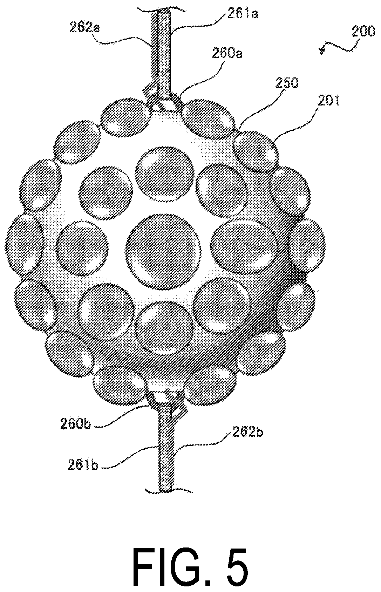

FIG. 5 is a diagram illustrating a first variation of the outer appearance configuration of the base station apparatus 200 according to the present embodiment.

The base station apparatus 200 includes a hook portion 260a provided at an upper end of the housing 250, a hook portion 260b provided at a lower end of the housing 250, a cable 262a extending upward from the housing 250, and a cable 262b extending downward from the housing 250.

The cable 262a and the cable 262b may be formed as optical fibers. The cable 262a is used for inter-base station communication with a neighboring base station on an upper side, and the cable 262b is used for inter-base station communication with a neighboring base station on a lower side. The base station apparatus 200 may relay data received from the neighboring base station on the upper side via the cable 262a to the neighboring base station on the lower side via the cable 262b. The base station apparatus 200 may relay data received from the neighboring base station on the lower side via the cable 262b to the neighboring base station on the upper side via the cable 262a.

A rope 261a is attached to the hook portion 260a on the upper side, and a rope 261b is attached to the hook portion 260b on the lower side. The cable 262a on the upper side is arranged along the rope 261a on the upper side, and the cable 262b on the lower side is arranged along the rope 261b on the lower side. The light communicator 201 on the front face of the housing 250 is arranged at a position that avoids the hook portion 260a and the hook portion 260b.

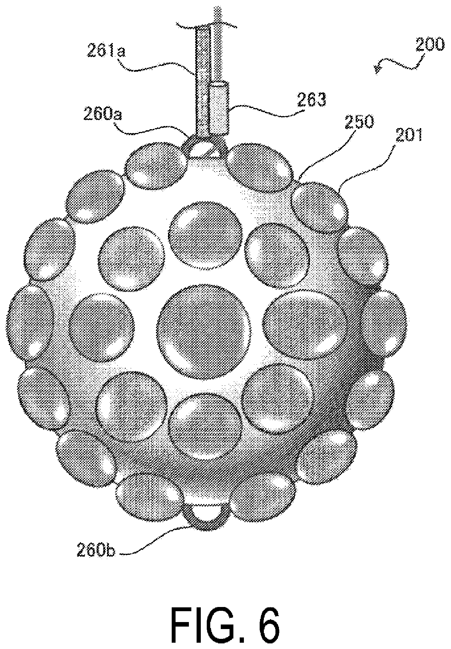

FIG. 6 is a diagram illustrating a second variation of the outer appearance configuration of the base station apparatus 200 according to the present embodiment.

In the present variation, the base station apparatus 200 includes the hook portion 260a provided at the upper end of the housing 250, the hook portion 260b provided at the lower end of the housing 250, and a laser communication device 263 provided on the upper side of the housing 250. The laser communication device 263 is used for inter-base station communication with the neighboring base station on the upper side.

Configuration Example of Terminal Apparatus

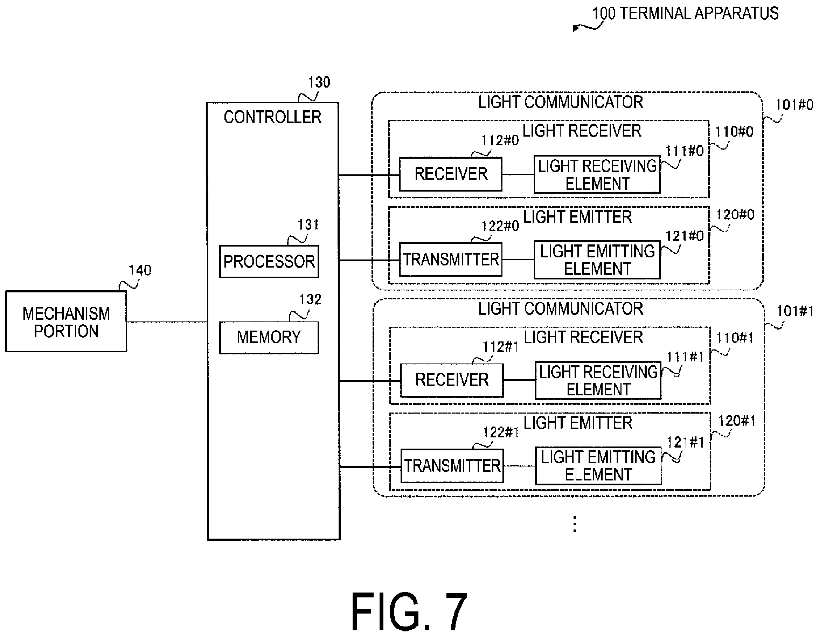

FIG. 7 is a diagram illustrating a block configuration example of the terminal apparatus 100 according to the present embodiment. The terminal apparatus 100 includes a plurality of light communicators 101 (101#0, 101#1, and ...), a controller 130, and a mechanism portion 140. The terminal apparatus 100 may include a battery for supplying electrical power necessary for the terminal apparatus 100 to operate. The terminal apparatus 100 may include a sensor such as an image sensor and generate sensor data.

The plurality of light communicators 101 are arranged so that directivities (optical axes) of the light communication are directed toward respectively different directions. Each light communicator 101 performs light communication (visible light communication in the present embodiment) with the base station apparatus 200 under control of the controller 130. Each light communicator 101 includes a light receiver 110 and a light emitter 120. Since each light communicator 101 is configured likewise, the configuration of the light communicator 101#0 will be described hereinafter.

A light receiver 110#0 of the light communicator 101#0 receives a light signal (a visible light signal in the present embodiment) from the base station apparatus 200, and outputs the received signal to the controller 130. The light receiver 110#0 includes at least one light receiving element 111#0 and a receiver 112#0. The light receiving element 111#0 may include a photodiode (PD) and a peripheral circuit thereof. The light receiving element 111#0 receives a light signal, converts the received light signal into an electrical signal (received signal), and outputs the received signal to the receiver 112#0. The optical axis of the light receiving element 111#0 is directed toward a predetermined direction different from the optical axis of a different light receiving element 111 (e.g., light receiving element 111#1). The receiver 112#0 may include an FPGA and/or an SoC. The receiver 112#0 converts the received signal output by each light receiving element 111#0, performs signal processing on the converted received signal, and outputs the received signal to the controller 130. At least part of the receiver 112#0 may be integrated with a different receiver 112 (e.g., receiver 112#1), or may be integrated with a transmitter 122.

A light emitter 120#0 of the light communicator 101#0 transmits a light signal (a visible light signal in the present embodiment) to the base station apparatus 200 under control of the controller 130. The light emitter 120#0 includes at least one light emitting element 121#0 and a transmitter 122#0. The light emitting element 121#0 may include a Laser Diode (LD) or a Light Emitting Diode (LED), and a peripheral circuit thereof. The light emitting element 121#0 converts an electrical signal (transmission signal) output by the transmitter 122#0 for light communication into a light signal, and transmits the light signal. The optical axis of the light emitting element 121#0 is directed toward a predetermined direction different from the optical axis of a different light emitting element 121 (e.g., light emitting element 121#1). In this regard, the optical axis of the light emitting element 121#0 is directed toward the same direction as that of the optical axis of the corresponding light receiving element 111#0. The transmitter 122#0 may include an FPGA and/or an SoC. The transmitter 122#0 performs signal processing on a transmission signal output by the controller 130, converts the signal after the signal processing, and outputs the converted signal to the light emitting element 121#0. At least part of the transmitter 122#0 may be integrated with a different transmitter 122 (e.g., transmitter 122#1) or may be integrated with the receiver 112.

The controller 130 controls an overall operation of the terminal apparatus 100. The operation of the above-described terminal apparatus 100 and the below-described operation of the terminal apparatus 100 may be operations performed under control of the controller 130. For example, the controller 130 controls the plurality of light communicators 101. The controller 130 includes at least one processor 131 and at least one memory 132. The memory 132 stores a program to be executed by the processor 131 and information to be used for processing by the processor 131. The processor 131 may include a digital signal processor and a CPU. The digital signal processor performs modulation and demodulation, coding and decoding, and the like on digital signals. The CPU executes the program stored in the memory and performs various types of processing. At least part of the controller 130 may be integrated with the receiver 112 or may be integrated with the transmitter 122.

The mechanism portion 140 includes a movement mechanism that moves the terminal apparatus 100 under control of the controller 130. The movement mechanism includes, for example, a motor and a screw connected to a rotation shaft of the motor. The mechanism portion 140 may include an arm like used for work in water.

In the terminal apparatus 100 configured as described above, the controller 130 performs connection control for establishing and/or maintaining light communication connection between the terminal apparatus 100 and the base station apparatus 200 so as to prioritize communication quality of light communication in the uplink (UL) over communication quality of light communication in the downlink (DL). Details of such connection control will be described below.

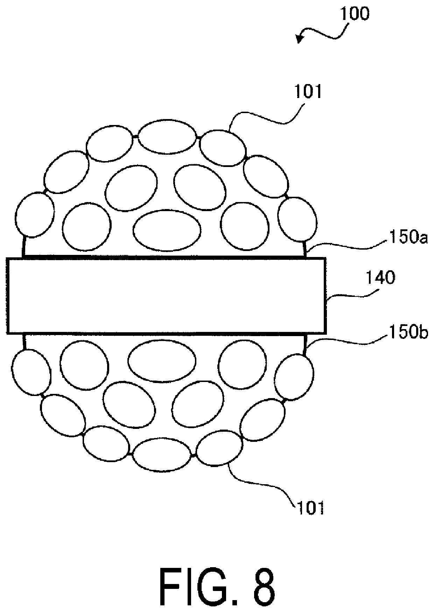

FIG. 8 is a diagram illustrating an outer appearance configuration example of the terminal apparatus 100 according to the present embodiment.

The terminal apparatus 100 includes a housing 150a on an upper side, a housing 150b on a lower side, and the mechanism portion 140 provided between the housing 150a and the housing 150b. Each of the housing 150a and the housing 150b has a hemispherical shape, and forms a spherical shape of the terminal apparatus 100 as a whole. Each of the housing 150a and the housing 150b includes on the surface thereof the plurality of light communicators 101 arranged in a dispersed manner. Each light communicator 101 is provided with a set of at least one light receiving element 111 and at least one light emitting element 121. Such a configuration enables the terminal apparatus 100 to perform light communication with the base station apparatuses 200 in various directions.

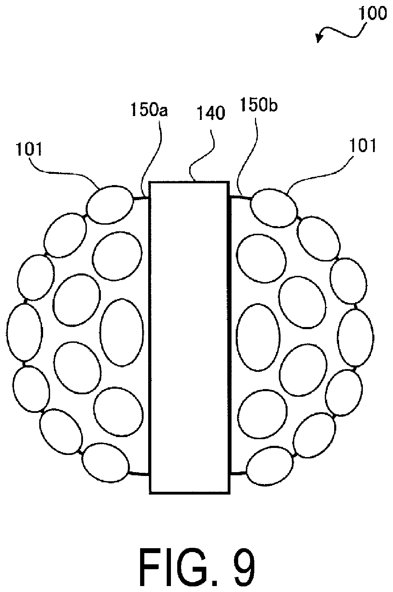

FIG. 9 is a diagram illustrating a first variation of an outer appearance configuration example of the terminal apparatus 100 according to the present embodiment.

In the present variation, the terminal apparatus 100 includes the housing 150a on the left side, the housing 150b on the right side, and the mechanism portion 140 provided between the housing 150a and the housing 150b. Each of the housing 150a and the housing 150b has a hemispherical shape, and forms a spherical shape of the terminal apparatus 100 as a whole. Each of the housing 150a and the housing 150b includes on the surface thereof the plurality of light communicators 101 arranged in a dispersed manner. Each light communicator 101 is provided with a set of at least one light receiving element 111 and at least one light emitting element 121.

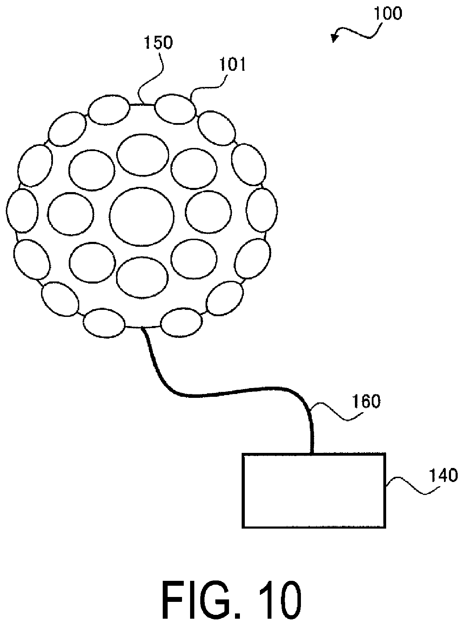

FIG. 10 is a diagram illustrating a second variation of the outer appearance configuration example of the terminal apparatus 100 according to the present embodiment.

In the present variation, the terminal apparatus 100 includes the housing 150 of the spherical shape, and the mechanism portion 140 connected with the housing 150 with a cable 160 interposed therebetween. The housing 150 has a spherical shape. The housing 150 includes on the surface thereof the plurality of light communicators 101 arranged in a distributed manner. Each light communicator 101 is provided with a set of at least one light receiving element 111 and at least one light emitting element 121.

Example of Light Communication

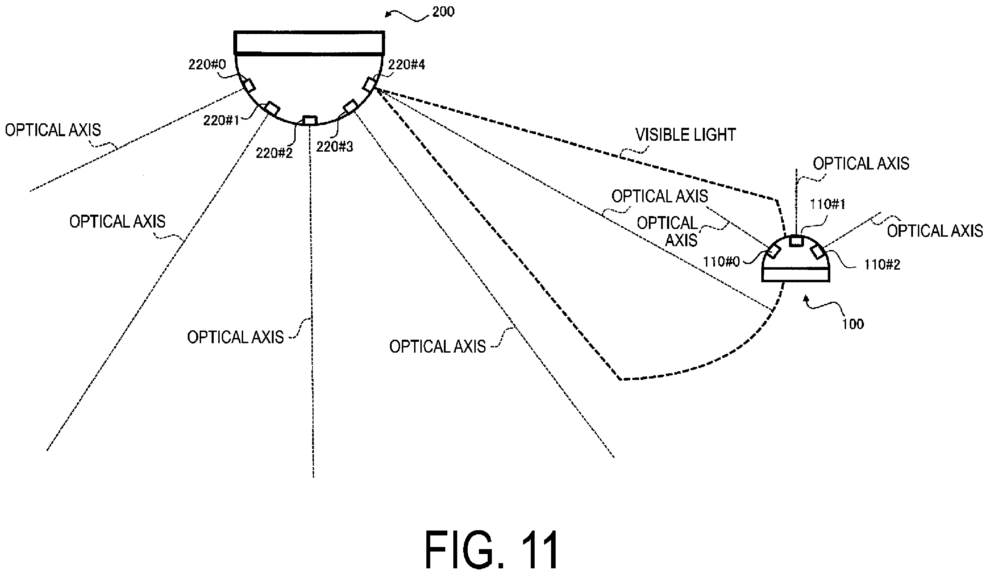

FIG. 11 is a diagram illustrating DL communication that is an example of light communication according to the present embodiment. In the illustrated example, the cross section of the base station apparatus 200 and the cross section of the terminal apparatus 100 are schematically illustrated for DL communication.

The plurality of light emitters 220 are arranged in the base station apparatus 200 such that, as a distance between the one light emitter 220 and a different light emitter 220 becomes long, an angle formed by the optical axis of the one light emitter 220 and the optical axis of the different light emitter 220 increases. For example, the angle formed by the optical axis of a light emitter 220#0 and the optical axis of the light emitter 220#2 that is not adjacent to the light emitter 220#0 is larger than the angle formed by the optical axis of the light emitter 220#0 and the optical axis of a light emitter 220#1 that is adjacent to the light emitter 220#0.

The base station apparatus 200 associates with the terminal apparatus 100 a light emitter 220#4 (light communicator #4) associated with the direction in which the terminal apparatus 100 is located, and performs light communication with the terminal apparatus 100 using the light emitter 220#4 (light communicator #4). The terminal apparatus 100 associates with the base station apparatus 200 the light receiver 110#0 (light communicator #0) associated with the direction in which the base station apparatus 200 is located, and performs light communication with the base station apparatus 200 using the light receiver 110#0 (light communicator #0).

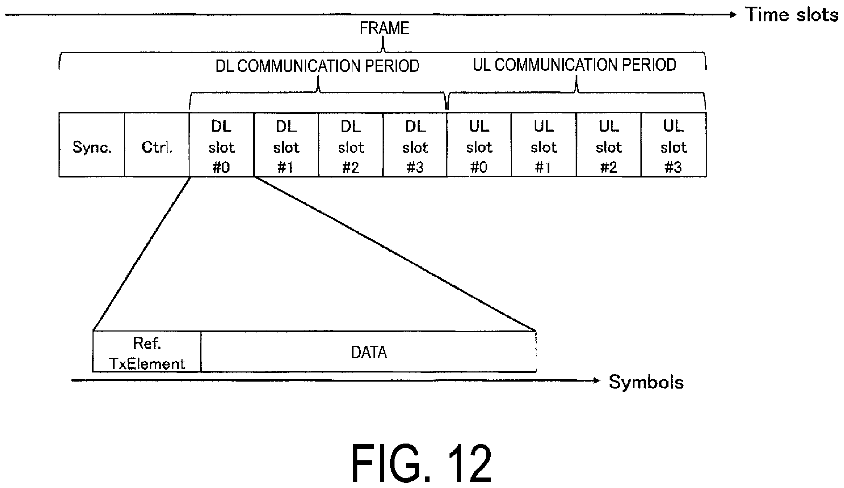

FIG. 12 is a diagram illustrating a configuration example of a communication frame used by the light communication system 1 according to the present embodiment. Although one communication frame includes 10 time slots will be described below in the illustrated example, the number of time slots constituting one communication frame is not limited to 10. Note that each time slot includes a predetermined number of symbol sections.

In this frame configuration example, the communication frame includes one synchronization slot (Sync.), one control slot (Ctrl.), four DL slots #0 to #3, and four UL slots #0 to #3. In this regard, in a scenario that a data amount of UL communication is larger than that of DL communication, UL slots in a communication frame may be provided more than DL slots.

The synchronization slot (Sync.) is a time slot in which the base station apparatus 200 transmits a synchronization light signal (and a reference light signal unique to the base station apparatus). The terminal apparatus 100 identifies the base station apparatus 200 based on the synchronization light signal received from the base station apparatus 200, and establishes or maintains synchronization with the base station apparatus 200 using the synchronization light signal. Note that the reference light signal unique to the base station apparatus may be transmitted in all slots other than the UL slot. The reference light signal is used by the terminal apparatus 100 to measure a reception intensity (reference signal intensity) from the base station apparatus 200.

The control slot (Ctrl.) is a time slot in which the base station apparatus 200 transmits a control light signal. The control light signal includes, for example, scheduling information indicating DL and UL resource allocations (e.g., time slot allocations). The terminal apparatus 100 recognizes own time slot allocation by, for example, a control light signal received from the base station apparatus 200.

The DL slots #0 to #3 constitute a DL communication period. The base station apparatus 200 allocates each of the DL slots #0 to #3 to the one or more terminal apparatuses 100. The base station apparatus 200 transmits a DL data light signal in each DL slot. A light emitting element-specific reference signal (Ref. TxElement) and a data light signal may be allocated in each DL slot in a time division manner.

The UL slots #0 to #3 constitute a UL communication period. The base station apparatus 200 allocates each of the UL slots #0 to #3 to the one or more terminal apparatuses 100. The terminal apparatus 100 transmits a UL data light signal in the allocated UL slot.

The base station apparatus 200 can perform simultaneous communication with the plurality of terminal apparatuses 100 located in mutually different directions. More specifically, the base station apparatus 200 can spatially multiplex the plurality of terminal apparatuses 100 located in mutually different directions. Hence, the base station apparatus 200 may allocate one DL slot or one UL slot to the plurality of terminal apparatuses 100.

Operation Example of Light Communication System

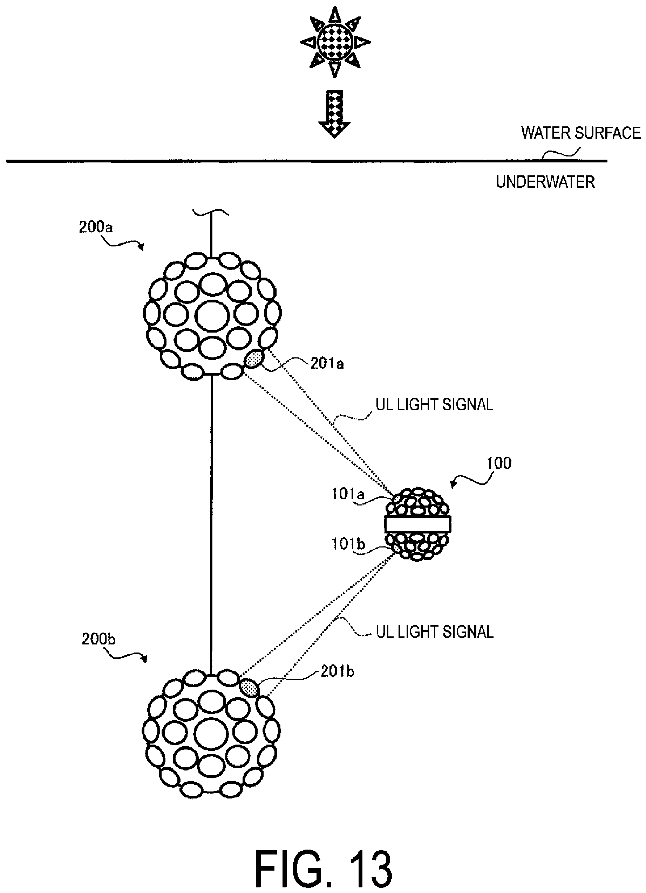

In the present embodiment, a configuration of the light communication system 1 will be described with reference to FIGs. 13 to 17. In the present embodiment, the light communication system 1 performs selection of a connection destination base station (serving base station) and maintenance of light communication connection under a condition that UL communication becomes good to support an application such as video upload that heavily depends on UL communication. More specifically, when the terminal apparatus 100 estimates UL communication quality of the base station apparatus 200, the terminal apparatus 100 selects the base station apparatus 200 suitable for a condition that the UL communication becomes good, and establishes the light communication connection with the selected base station apparatus 200.

Conventionally, according to wireless communication that uses radio waves on the ground, disparity of communication quality between DL communication and UL communication is unlikely to be produced, and therefore connection control based on the reception strength of DL radio waves received by the terminal apparatus 100 from the base station apparatus 200 is performed. That is, the terminal apparatus 100 establishes connection with the base station apparatus 200 that is the transmission source of the reference signal having the highest DL reception strength.

On the other hand, according to light communication, there is noise such as solar noise that greatly influences a light receiver in a specific direction. Therefore, the UL communication quality cannot be correctly estimated only based on the DL reception intensity. More specifically, since light has strong directivity (straightness), it is assumed that reception statuses of light receivers at different positions are different due to the influence of solar noise and/or ambient light. Therefore, when the same/similar connection control as/to wireless communication that uses radio waves on the ground is performed in the light communication system 1, the terminal apparatus 100 is concerned to be connected to the base station apparatus 200 having poor UL communication quality. Note that sunlight and/or ambient light will be collectively referred to as "ambient light" hereinafter.

FIG. 13 is a diagram for explaining an influence of solar noise on the light communication system 1 according to the present embodiment.

In the illustrated example, the base station apparatus 200a and the base station apparatus 200a located below the base station apparatus 200b are underwater. The distance between the terminal apparatus 100 and the base station apparatus 200a is equal to the distance between the terminal apparatus 100 and the base station apparatus 200b. Sunlight enters the terminal apparatus 100 and each base station apparatus 200 from above.

It is assumed that the terminal apparatus 100 transmits a UL light signal from the own light communicator 101a associated with the direction of the base station apparatus 200a, and the base station apparatus 200a receives the UL light signal by the own light communicator 201a associated with the direction of the terminal apparatus 100. It is assumed that the terminal apparatus 100 transmits a UL light signal from the own light communicator 101b associated with the direction of the base station apparatus 200b, and the base station apparatus 200b receives the UL light signal by the own light communicator 201b associated with the direction of the terminal apparatus 100.

The distances between the terminal apparatus 100 and the respective base station apparatuses 200a are equal, so that, when there is no solar noise, it can be assumed that the communication quality of the UL light signal received by the light communicator 201a of the base station apparatus 200a is equal to the communication quality of the UL light signal received by the light communicator 201b of the base station apparatus 200b.

However, the optical axis of the light communicator 201b of the base station apparatus 200b is directed to a diagonally upper direction, and therefore sunlight enters as a noise signal. Therefore, the communication quality of the UL light signal received by the light communicator 201b of the base station apparatus 200b deteriorates. By contrast with this, the optical axis of the light communicator 201a of the base station apparatus 200a is directed toward a diagonally lower direction, so that sunlight does not enter as a noise signal, and the communication quality of the UL light signal received by the light communicator 201b of the base station apparatus 200b does not deteriorate. Hence, when UL communication is prioritized, it is preferable that the terminal apparatus 100 connects to the base station apparatus 200a instead of the base station apparatus 200b.

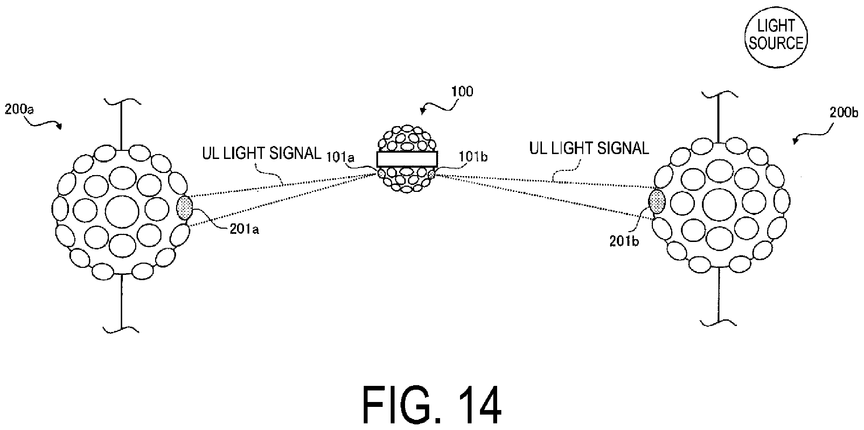

FIG. 14 is a diagram for explaining an influence of ambient light in the light communication system 1 according to the present embodiment.

In the illustrated example, the base station apparatus 200a and the base station apparatus 200b located on the right side of the base station apparatus 200a are underwater. The distance between the terminal apparatus 100 and the base station apparatus 200a is equal to the distance between the terminal apparatus 100 and the base station apparatus 200b. Light (ambient light) from light sources located on a diagonally upper right side of the base station apparatus 200b enters the terminal apparatus 100 and each base station apparatus 200. The light source is assumed to be in water, but may also be above the water surface.

It is assumed that the terminal apparatus 100 transmits a UL light signal from the own light communicator 101a associated with the direction of the base station apparatus 200a, and the base station apparatus 200a receives the UL light signal by the own light communicator 201a associated with the direction of the terminal apparatus 100. It is assumed that the terminal apparatus 100 transmits a UL light signal from the own light communicator 101b associated with the direction of the base station apparatus 200b, and the base station apparatus 200b receives the UL light signal by the own light communicator 201b associated with the direction of the terminal apparatus 100.

The distances between the terminal apparatus 100 and the respective base station apparatuses 200a are equal, so that, when there is no solar noise, it can be assumed that the communication quality of the UL light signal received by the light communicator 201a of the base station apparatus 200a is equal to the communication quality of the UL light signal received by the light communicator 201b of the base station apparatus 200b.

However, the optical axis of the light communicator 201a of the base station apparatus 200a is directed to a right direction, and therefore the ambient light from the light source enters as a noise signal. Therefore, the communication quality of the UL light signals received by the light communicator 201a of the base station apparatus 200a deteriorates. By contrast with this, the optical axis of the light communicator 201b of the base station apparatus 200b is directed to a left direction, so that ambient light does not enter as a noise signal, and the communication quality of the UL light signal received by the light communicator 201b of the base station apparatus 200b does not deteriorate. Hence, when UL communication is prioritized, it is preferable that the terminal apparatus 100 connects to the base station apparatus 200b instead of the base station apparatus 200a.

In the present embodiment, the controller 130 of the terminal apparatus 100 estimates the UL communication quality that is the reception quality of the UL light signal received by the base station apparatus 200 from the terminal apparatus 100, and uses the estimated UL communication quality for connection control. Here, the controller 130 of the terminal apparatus 100 estimates the UL communication quality based on the reception statuses in the plurality of own light communicators 101. The controller 130 of the terminal apparatus 100 estimates the UL communication quality for each of the plurality of base station apparatuses 200, selects the base station apparatus 200 whose UL communication quality satisfies a predetermined criterion from the plurality of base station apparatuses 200, and tries to connect to the selected base station apparatus 200. In the present embodiment, the predetermined criterion is a condition that UL communication quality is the highest among the plurality of base station apparatuses 200. In this regard, the predetermined criterion may be a condition that UL communication quality is higher than a threshold value.

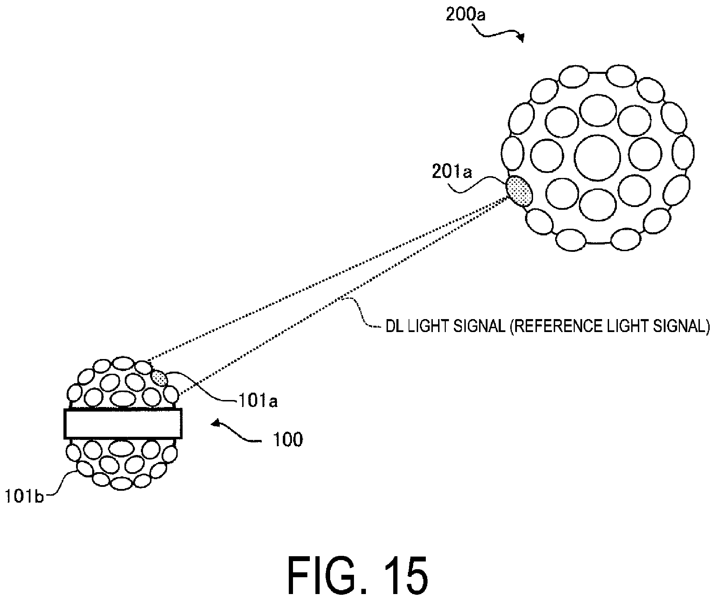

FIG. 15 is a diagram for explaining an estimation operation of UL communication quality performed by the terminal apparatus 100 according to the present embodiment.

The light communicator 101a (light receiver 110) of the terminal apparatus 100 receives the DL light signal from the light communicator 201a (light emitter 220) of the base station apparatus 200, more specifically, the reference light signal. The controller 130 of the terminal apparatus 100 measures the reference signal intensity that is the reception intensity of the reference light signal in the light communicator 101a (first light communicator) that receives the reference light signal from the base station apparatus 200. The light communicator 101a is a light communicator that is scheduled to be used for light communication with the base station apparatus 200.

The controller 130 of the terminal apparatus 100 estimates the ambient light noise intensity that is the reception intensity of ambient light in the base station apparatus 200 based on the reception intensity in the light communicator 101b (second light communicator) different from the light communicator 101a. The light communicator 101b is a light communicator 101 whose optical axis is directed toward a direction opposite to the direction toward which the optical axis of the light communicator 101a is directed. It can be assumed that the ambient light entering the light communicator 101b (light receiver 110) also enters the light communicator 201a (light receiver 210) of the base station apparatus 200 likewise, so that the reception intensity in the light communicator 101a on the opposite side to the light communicator 101b can be estimated as the ambient light noise intensity.

The controller 130 of the terminal apparatus 100 estimates the UL communication quality with respect to the base station apparatus 200 based on the reference signal intensity measured using the light communicator 101a and the ambient light noise intensity estimated using the light communicator 101b. The UL communication quality is calculated according to, for example,

"UL communication quality" = "reference signal intensity" - "ambient light noise intensity" ... Equation (1).

As described above, when estimating the ambient light noise in the light communicator 201a (light receiver 210) of the connection candidate base station apparatus 200, the terminal apparatus 100 uses the ambient light noise intensity measured by the light communicator 101b (light receiver 110) of the terminal apparatus 100 facing the same direction as that of the light communicator 201a (light receiver 210) of the base station apparatus 200 as an estimation value of the ambient light noise received by the light communicator 201a (light receiver 210) of the base station apparatus 200. Thus, the terminal apparatus 100 can compare the UL communication quality of the respective base station apparatuses 200 in the surroundings before trying connection, and select the base station apparatus 200 that the terminal apparatus 100 needs to be connected.

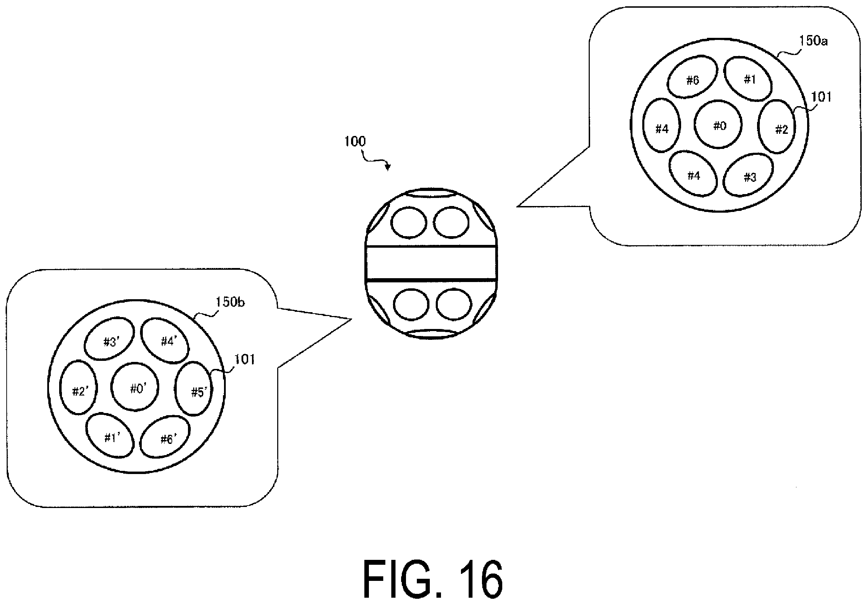

FIG. 16 is a diagram for explaining an operation of selecting the light communicator 101 (light receiver 110) for noise estimation in the terminal apparatus 100 according to the present embodiment. In the illustrated example, the number of the light communicators 101 of the terminal apparatus 100 is smaller than the number of the light communicators 101 of the terminal apparatus 100 illustrated in FIG. 15.

The controller 130 of the terminal apparatus 100 registers as a pair in advance the light communicators 101 (light receivers 110) whose optical axes are directed toward opposite directions to each other, and selects for noise estimation the light communicator 101 (light receiver 110) paired with the light communicator 101 (light receiver 110) that has received the reference light signal.

In the illustrated example, a light communicator 101 (light receiver 110) #0 and a light communicator 101 (light receiver 110) #0' are registered as a pair. Similarly, a light communicator 101 (light receiver 110) #1 and a light communicator 101 (light receiver 110) #1' are registered as a pair, a light communicator 101 (light receiver 110) #2 and a light communicator 101 (light receiver 110) #2' are registered as a pair, a light communicator 101 (light receiver 110) #3 and a light communicator 101 (light receiver 110) #3' are registered as a pair, a light communicator 101 (light receiver 110) #4 and a light communicator 101 (light receiver 110) #4' are registered as a pair, a light communicator 101 (light receiver 110) #5 and a light communicator 101 (light receiver 110) #5' are registered as a pair, and a light communicator 101 (light receiver 110) #6 and a light communicator 101 (light receiver 110) #6' are registered as a pair.

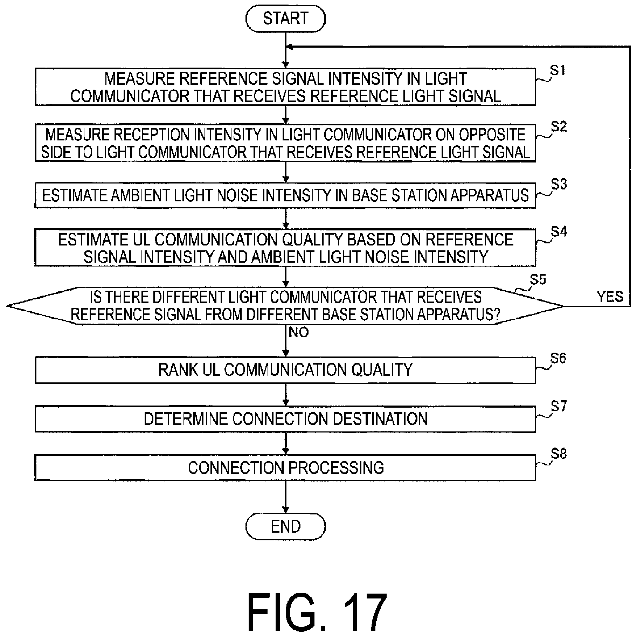

FIG. 17 is a diagram illustrating an example of an operation flow of the terminal apparatus 100 according to the present embodiment.

In step S1, the controller 130 of the terminal apparatus 100 measures the reference signal intensity in the light communicator 101a that receives the reference light signal from the base station apparatus 200.

In step S2, the controller 130 of the terminal apparatus 100 measures the reception intensity in the light communicator 101b on the opposite side (i.e., a pair) to the light communicator 101a that receives the reference light signal from the base station apparatus 200.

In step S3, the controller 130 of the terminal apparatus 100 estimates the ambient light noise intensity in the base station apparatus 200 based on the reception intensity measured in step S2. In the present embodiment, the reception intensity measured in step S2 may be estimated as is as the ambient light noise intensity in the base station apparatus 200.

In step S4, the controller 130 of the terminal apparatus 100 estimates UL communication quality based on the reference signal intensity measured in step S1 and the ambient light noise intensity estimated in step S3 according to above-described Equation (1).

In step S5, the controller 130 of the terminal apparatus 100 determines whether there is the different light communicator 101 that receives a reference light signal from the different base station apparatus 200. That is, the controller 130 of the terminal apparatus 100 determines whether there is a different candidate base station. In a case of YES in step S5, the controller 130 of the terminal apparatus 100 estimates the UL communication quality of the different base station apparatus 200 (steps S1 to S4). In this way, the controller 130 of the terminal apparatus 100 estimates the UL communication quality for each of the plurality of candidate base station apparatuses 200.

In a case of NO in step S5, in step S6, the controller 130 of the terminal apparatus 100 ranks the UL communication quality of each of the plurality of candidate base station apparatuses 200 (that is, ranks the UL communication quality in descending order).

In step S7, the controller 130 of the terminal apparatus 100 determines (selects) the base station apparatus 200 as a connection destination based on a ranking result in step S6. For example, the controller 130 determines the base station apparatus 200 having the highest UL communication quality as the connection destination.

In step S8, the controller 130 of the terminal apparatus 100 tries connection to the base station apparatus 200 determined in step S7. For example, the terminal apparatus 100 establishes light communication connection with the base station apparatus 200 by transmitting a connection request message to the base station apparatus 200 and receiving a response message from the base station apparatus 200. Note that, when trial to connect to the base station apparatus 200 fails, the controller 130 of the terminal apparatus 100 may select the second base station apparatus 200 in the ranking, and try to connect to the base station apparatus 200.

First Variation of First Embodiment

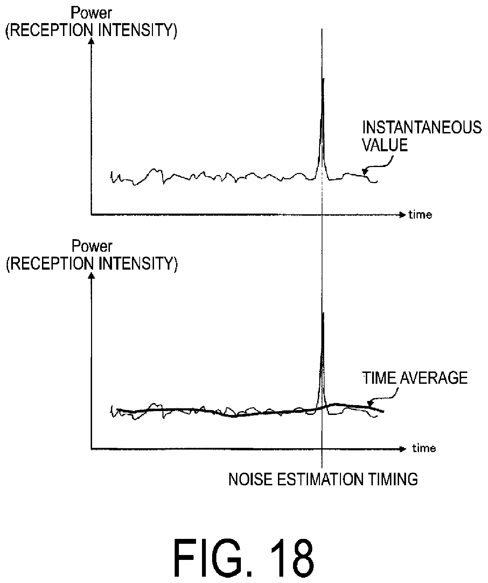

A difference of the first variation of the first embodiment from the above-described first embodiment will be mainly described. FIG. 18 is a diagram for explaining an operation according to the present variation.

In the above-described first embodiment, there is a probability that light sources for work of underwater drones or the like or transmission light of other visible light communication may enter at a time of measurement of the ambient light in step S2 in FIG. 17. When the ambient light is measured in a state where such light enters, the intensity of ambient light entering the base station apparatus 200 becomes excessively high, and there is a probability that the appropriate base station apparatus 200 is erroneously selected.

In the present variation, to remove the influence of such ambient light that temporarily enters, the ambient light is measured for a certain time to calculate an average intensity and use a value of the average intensity for noise estimation instead of using an instantaneous ambient light measurement result. That is, the controller 130 of the terminal apparatus 100 estimates the ambient light noise intensity by averaging a plurality of measurement values obtained by measuring the reception intensity in the light communicator 101b on the opposite side (i.e., a pair) to the light communicator 101a that receives the reference light signal from the base station apparatus 200 a plurality of times within a predetermined period (step S3 in FIG. 17). Thus, the base station apparatus 200 suitable for UL communication can be selected without being influenced by instantaneous ambient light.

Note that such a method may be applied to measurement of the reference signal intensity in step S2 in FIG. 17. That is, the controller 130 of the terminal apparatus 100 may measure the reference signal intensity in the light communicator 101a that receives the reference light signal from the base station apparatus 200 a plurality of times, and acquire a result obtained by averaging the plurality of measurement values as the reference signal intensity.

Second Variation of First Embodiment

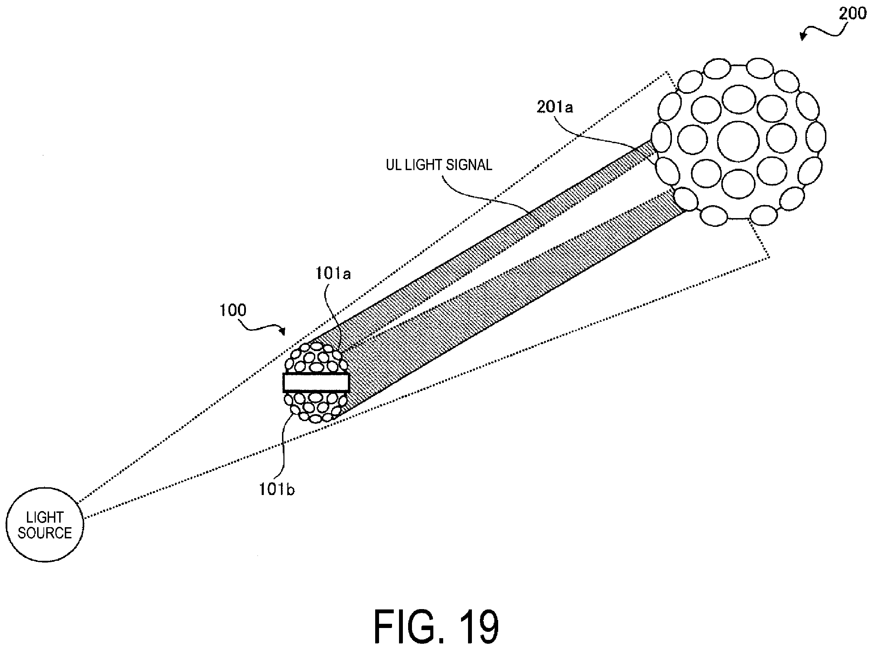

A difference of the second variation of the first embodiment from the above-described first embodiment will be mainly described. The present variation may be implemented in combination with the above-described first embodiment or the variations thereof. FIG. 19 is a diagram for explaining an operation according to the present variation.

A situation is assumed that ambient light constantly enters the light receiver 110 (e.g., the light receiver 110 of the light communicator 101b) in a specific direction of the terminal apparatus 100. When the ambient light noise intensity of the base station apparatus 200 is estimated using the light receiver 110 that the ambient light enters, the estimated ambient light noise intensity usually increases due to the influence of the entering ambient light, and therefore the estimated UL reception quality deteriorates.

However, as illustrated in FIG. 19, the ambient light entering the terminal apparatus 100 may not enter the base station apparatus 200 because the terminal apparatus 100 itself shields the ambient light. As a result, there is a probability that the actual UL reception quality of the base station apparatus 200 is better than the estimated ambient light noise intensity. In this case, it is concerned that, when the UL reception quality is estimated based on the measurement value in the terminal apparatus 100, the base station apparatus 200 suitable for UL communication cannot be correctly selected.

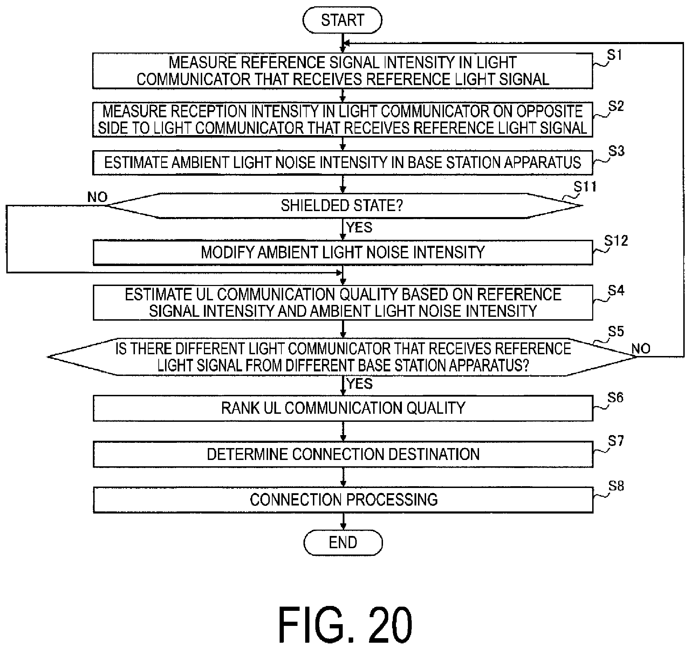

FIG. 20 is a diagram illustrating an example of an operation flow of the terminal apparatus 100 according to the present variation. Here, differences from the above-described first embodiment will be described.

In the present variation, in step S11, the controller 130 of the terminal apparatus 100 determines whether ambient light is in a shielded state where the ambient light entering the base station apparatus 200 is shielded by the terminal apparatus 100. When it is determined that the ambient light is in the shielded state (step S11: YES), the controller 130 of the terminal apparatus 100 corrects the ambient light noise intensity estimated in step S3 to a predetermined alternative value in step S12.

For example, the controller 130 of the terminal apparatus 100 determines that the ambient light is in the shielded state based on a fact that a condition 1 (first condition) has been satisfied that the ambient light noise intensity estimated in step S3 is a first threshold value or more and at least the reception intensity of the ambient light in the light communicator 101 (first light communicator) used to measure the reference signal intensity in step S1 is less than a second threshold value. That is, the controller 130 of the terminal apparatus 100 determines that the ambient light is in the shielded state based on a fact that the condition 1 has been satisfied that the estimated ambient light noise is sufficiently large, yet the ambient light noise in the other light receiver is sufficiently small.

Here, the light communicator 101 (first light communicator) used for measurement of the reference signal intensity in step S1 is the light communicator 101 on the opposite side to the light communicator 101 (second light communicator) used for estimation of the ambient light noise intensity in step S3. When the light communicator 101 (first light communicator) receives ambient light other than the reference light signal, the terminal apparatus 100 is influenced by the ambient light as a whole, which can be regarded as that this state does not correspond to the shielded state.

When determining that the condition 1 has been satisfied and determining that a following condition 2a and/or condition 2b is satisfied, the controller 130 of the terminal apparatus 100 may determine that the ambient light is in the shielded state.

Condition 2a: The distance between the terminal apparatus 100 and the base station apparatus 200 is sufficiently short.

When, for example, the reference signal intensity measured in step S1 is greater than a threshold value, the controller 130 of the terminal apparatus 100 may regard that the distance between the terminal apparatus 100 and the base station apparatus 200 is sufficiently short and determine that the condition 2a has been satisfied. Here, the controller 130 of the terminal apparatus 100 uses the reference signal intensity measured in step S1 as a value indicating the distance between the terminal apparatus 100 and the base station apparatus 200. However, as will be described below, a value obtained by subtracting the transmission electrical power of the reference light signal from the reference signal intensity measured in step S1 may be used as a value indicating the distance between the terminal apparatus 100 and the base station apparatus 200. When the condition 1 is satisfied and the distance between the terminal apparatus 100 and the base station apparatus 200 is the threshold value or less (that is, the condition 2a has been satisfied), the controller 130 of the terminal apparatus 100 determines that the ambient light is in the shielded state. When the distance between the terminal apparatus 100 and the base station apparatus 200 is sufficiently short, it can be regarded that the ambient light readily enters the shade of terminal apparatus 100, that is, the ambient light is in a shielded state.

Condition 2b: A light receiver from which great ambient light noise has been measured is limited.

When, for example, the noise intensity of the light communicator 101 (light receiver 110) around the light communicator 101 (second light communicator) used to estimate the ambient light noise intensity in step S3 is smaller than the threshold value, the controller 130 of the terminal apparatus 100 may determine that the condition 2b has been satisfied. When the condition 1 is satisfied and the reception intensity of ambient light in the light communicator 101 around the light communicator 101 (second light communicator) used to estimate the ambient light noise intensity in step S3 is less than the threshold value (that is, the condition 2b has been satisfied), the controller 130 of the terminal apparatus 100 determines that the ambient light is in the shielded state.

When determining that the ambient light is in the shielded state, the controller 130 of the terminal apparatus 100 uses a predetermined alternative value instead of the ambient light noise intensity estimated in step S3 (step S12). The predetermined alternative value may be an average value or a median value of the reception intensities in the plurality of respective light communicators 101 of the terminal apparatus 100.

The controller 130 of the terminal apparatus 100 may acquire from the base station apparatus 200 the ambient light noise intensity derived by the base station apparatus 200, and use the ambient light noise intensity acquired from the base station apparatus 200 as the predetermined alternative value. In this case, the base station apparatus 200 notifies the terminal apparatus 100 of information on the ambient light noise intensity by broadcasting. Here, the ambient light noise intensity derived by the base station apparatus 200 may be, for example, an average value of the ambient light intensities measured by the available light receivers 210 of the base station apparatus 200. The ambient light noise intensity derived by the base station apparatus 200 may be an average value of the ambient light intensities measured for each group (area) of the light receivers 210 of the base station apparatus 200.

According to the present variation, even when ambient light from a specific direction enters the terminal apparatus 100 and noise estimation is difficult, the base station apparatus 200 suitable for UL communication can be selected.

Third Variation of First Embodiment

A difference of the third variation of the first embodiment from the above-described first embodiment will be mainly described. The present variation may be implemented in combination with the above-described first embodiment or the variations thereof.

When transmission electrical power of a reference light signal is different per base station apparatus 200, if UL communication quality is estimated (more specifically, calculated according to above-described Equation (1)) without taking the transmission electrical power into account, the terminal apparatus 100 is concerned to be connected to the (distant) base station apparatus 200 having high transmission electrical power yet poor UL communication quality. Hence, in the present variation, the base station apparatus 200 transmits the transmission electrical power of the reference light signal as broadcast information. The controller 130 of the terminal apparatus 100 acquires from the base station apparatus 200 information indicating transmission electrical power of a reference signal in the base station apparatus 200.

The controller 130 of the terminal apparatus 100 calculates the UL communication quality from the reference signal intensity, the transmission electrical power, and the ambient light noise intensity according to following Equation (2):

"UL communication quality" = "reference signal intensity" - "transmission electrical power" - "ambient light noise intensity" [Equation 2]

The controller 130 of the terminal apparatus 100 determines the connection destination base station apparatus 200 based on the calculated UL communication quality similarly to the above-described first embodiment.

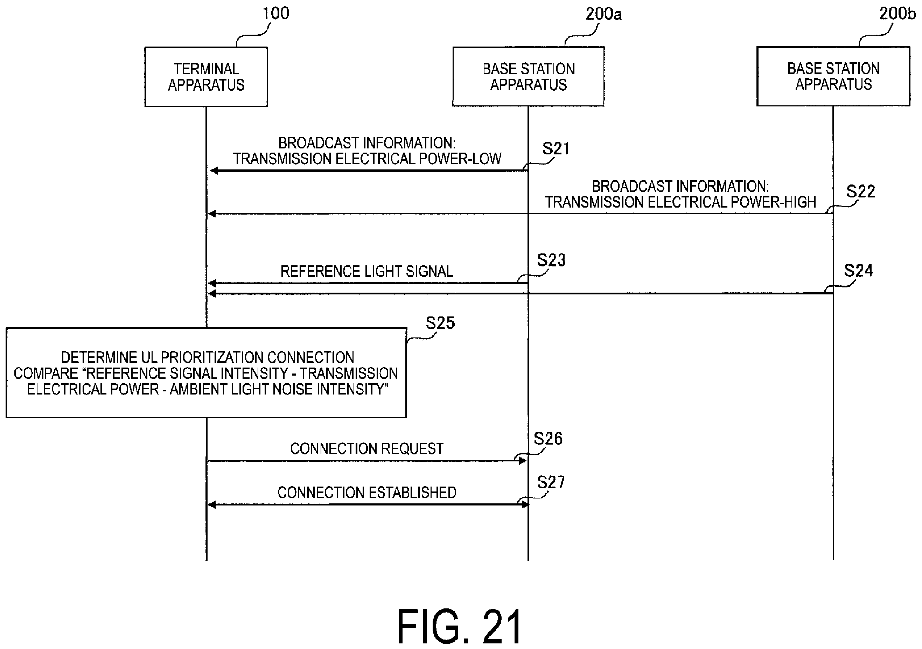

FIG. 21 is a diagram illustrating an example of an operation sequence of the light communication system 1 according to the present variation.

In step S21, the base station apparatus 200a transmits broadcast information indicating the transmission electrical power of the own reference light signal. The terminal apparatus 100 receives the broadcast information. Here, it is assumed that the transmission electrical power takes a small value.

In step S22, the base station apparatus 200b transmits the broadcast information indicating the transmission electrical power of the own reference light signal. The terminal apparatus 100 receives the broadcast information. Here, it is assumed that the transmission electrical power takes a large value.

In step S23, the base station apparatus 200a transmits a reference light signal. The terminal apparatus 100 receives the reference light signal and measures the reference signal intensity.

In step S24, the base station apparatus 200b transmits a reference light signal. The terminal apparatus 100 receives the reference light signal and measures the reference signal intensity.

In step S25, the terminal apparatus 100 estimates UL communication quality for each of the base station apparatus 200a and the base station apparatus 200b according to above-described Equation (2), and determines the connection destination base station apparatus 200 by comparing the UL communication quality. Here, the description will be continued on the assumption that the UL communication quality estimated for the base station apparatus 200a is higher than the UL communication quality estimated for the base station apparatus 200b.

In step S26, the terminal apparatus 100 determines the base station apparatus 200a as a connection destination, and transmits a connection request message to the base station apparatus 200a. The base station apparatus 200a receives the connection request message.

As a result, in step S27, the terminal apparatus 100 establishes light communication connection with the base station apparatus 200a.

Second Embodiment

Differences of a second embodiment from the above-described first embodiment will be mainly described. The present embodiment can be implemented in combination with the above-described first embodiment or the variations thereof.

In the above-described first embodiment, an operation of establishing light communication connection between the terminal apparatus 100 and the base station apparatus 200 has been mainly described as an example of connection control. In the second embodiment, an operation for maintaining light communication connection between the terminal apparatus 100 and the base station apparatus 200 will be mainly described as an example of connection control.

According to the above-described first embodiment, even when the terminal apparatus 100 side selects the base station apparatus 200 having good UL communication quality and performs connection, the base station apparatus 200 side is concerned to perform control without taking UL prioritization connection into account. As a result, the base station apparatus 200 may hand over the terminal apparatus 100 to the different base station apparatus 200 having poor UL communication quality. Therefore, the base station apparatus 200 does not perform control while prioritizing DL for the terminal apparatus 100 for which connection has been established while prioritizing UL, and needs to perform control based on a condition that connection can be maintained while prioritizing UL.

In the present embodiment, the controller 130 of the terminal apparatus 100 notifies the base station apparatus 200 of that the terminal apparatus 100 is performing the UL prioritization connection in processing of establishing connection with the base station apparatus 200. Thus, the base station apparatus 200 can recognize that the terminal apparatus 100 is performing the UL prioritization connection, and can perform control for maintaining the UL prioritization connection.

In the present embodiment, the base station apparatus 200 may notify the terminal apparatus 100 of whether the base station apparatus 200 can perform connection control of prioritizing UL communication quality. For example, the base station apparatus 200 transmits broadcast information indicating that the base station apparatus 200 can perform connection control of prioritizing UL communication quality. Thus, the terminal apparatus 100 can preferentially determine as the connection destination the base station apparatus 200 that can perform the connection control of prioritizing the UL communication quality.

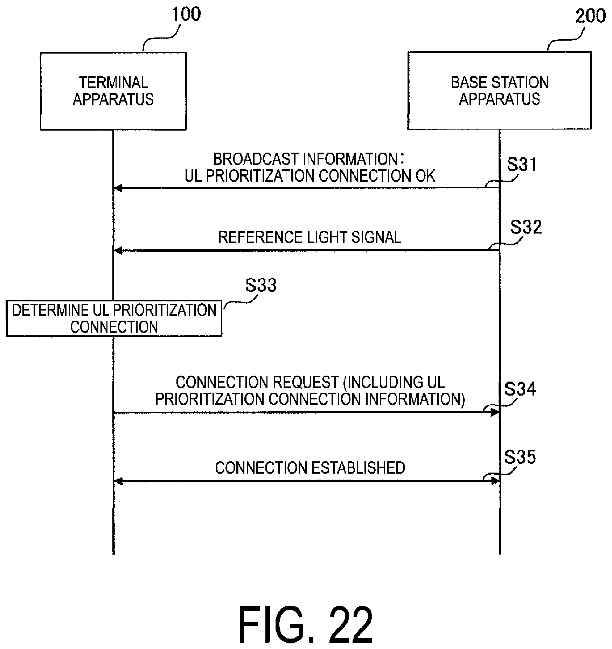

FIG. 22 is a diagram illustrating an example of an operation sequence of the light communication system 1 according to the present embodiment.

In step S31, the base station apparatus 200 transmits broadcast information indicating that the base station apparatus 200 can perform connection control of prioritizing the UL communication quality. The terminal apparatus 100 receives the broadcast information.

In step S32, the base station apparatus 200 transmits a reference light signal. The terminal apparatus 100 receives the reference light signal and measures the reference signal intensity.

In step S33, the terminal apparatus 100 estimates the UL communication quality of the base station apparatus 200, and determines the base station apparatus 200 as a connection destination.

In step S34, the terminal apparatus 100 transmits to the base station apparatus 200 a connection request message including information indicating that the UL prioritization connection is being performed. The base station apparatus 200 receives the connection request message.

As a result, in step S35, the terminal apparatus 100 establishes light communication connection with the base station apparatus 200.

Variation of Second Embodiment

Differences of a variation of the second embodiment from the above-described second embodiment will be described. The present variation may be implemented in combination with the above-described embodiment or the variations thereof.

In the present variation, the base station apparatus 200 configures the terminal apparatus 100 to transmit to the base station apparatus 200 a measurement report message including information indicating the UL communication quality estimated by the terminal apparatus 100. The base station apparatus 200 determines handover of the terminal apparatus 100 from the own base station apparatus 200 to the different base station apparatus 200 based on the measurement report message from the terminal apparatus 100. Thus, the base station apparatus 200 can hand over the terminal apparatus 100 to the different base station apparatus 200 having good UL communication quality.

The controller 130 of the terminal apparatus 100 may trigger transmission of the measurement report message to the base station apparatus 200 in response to that the estimated UL communication quality has satisfied a predetermined trigger condition. Such a trigger condition may include any of the following.

- UL communication quality of the connection destination base station apparatus 200 falls below a threshold value.
- UL communication quality of the connection destination base station apparatus 200 deteriorates more than UL communication quality of the different base station apparatus 200.
- A negative offset value at a time of UL prioritization is applied to the threshold value to be compared with the DL communication quality of the connection destination base station apparatus 200, and a lower threshold value is applied.

In the present variation, the base station apparatus 200 may notify the different base station apparatus 200 of that the terminal apparatus 100 is performing UL prioritization connection in processing of handing over the terminal apparatus 100 from the own base station apparatus 200 to the different base station apparatus 200. Thus, UL prioritization connection information can be shared between the base station apparatuses 200, so that the handover destination base station apparatus 200 can continue control for maintaining the UL prioritization connection.

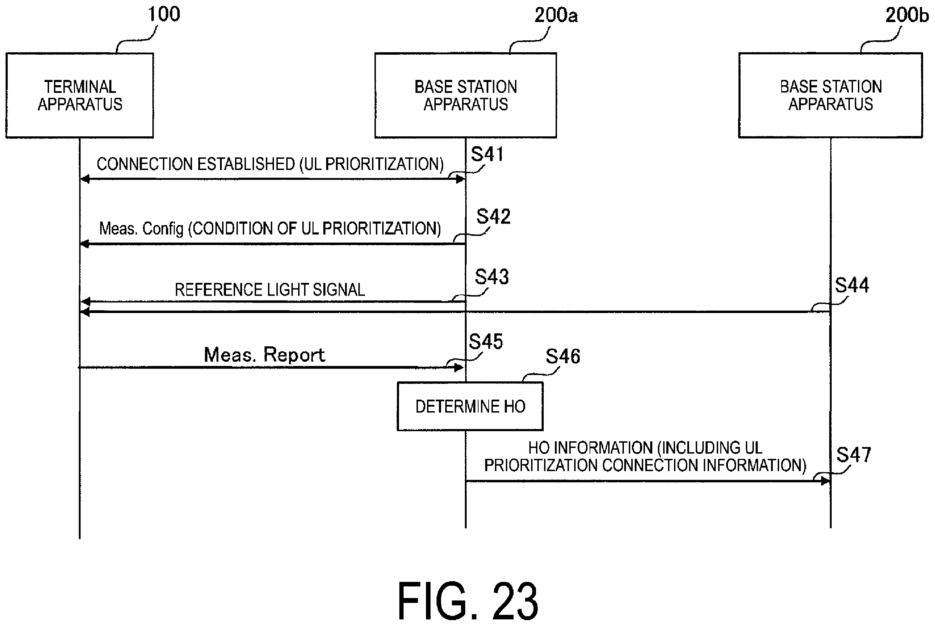

FIG. 23 is a diagram illustrating an example of an operation sequence of the light communication system 1 according to the present variation.

In step S41, the terminal apparatus 100 establishes light communication connection with the base station apparatus 200a by the method according to the above-described first embodiment or the variations thereof. When the light communication connection is established, the terminal apparatus 100 notifies the base station apparatus 200a of that the terminal apparatus 100 is performing the UL prioritization connection.

In step S42, the base station apparatus 200a transmits to the terminal apparatus 100 configuration information (Meas. Config) for configuring transmission of the measurement report message. The terminal apparatus 100 receives the configuration information. The configuration information may include information for configuring the trigger condition relating to the above-described UL communication quality. The configuration information may include information for configuring to include UL communication quality in the measurement report message.

In step S43, the base station apparatus 200a transmits a reference light signal. The terminal apparatus 100 receives the reference light signal, measures the reference signal intensity, and estimates the UL communication quality of the base station apparatus 200a by the method according to the above-described first embodiment or the variations thereof.

In step S44, the base station apparatus 200b transmits a reference light signal. The terminal apparatus 100 receives the reference light signal, measures the reference signal intensity, and estimates the UL communication quality of the base station apparatus 200b by the method according to the above-described first embodiment or the variations thereof.

In step S45, the terminal apparatus 100 transmits a measurement report message (Meas. Report) to the base station apparatus 200a. The base station apparatus 200a receives the measurement report message. The terminal apparatus 100 may transmit the measurement report message in response to that the trigger condition configured in step S42 has been satisfied. The terminal apparatus 100 may include the UL communication quality estimated in step S43 and step S44 in the measurement report message.

In step S46, the base station apparatus 200a determines handover (HO) of the terminal apparatus 100 to the base station apparatus 200b based on the measurement report message in step S45.

In step S47, the base station apparatus 200a transmits HO information including information indicating that the terminal apparatus 100 is performing UL prioritization connection to the base station apparatus 200b by inter-base station communication. The base station apparatus 200b receives the HO information. The base station apparatus 200a may transmit an HO request message including the HO information to the base station apparatus 200b. As a result, HO of the terminal apparatus 100 from the base station apparatus 200a to the base station apparatus 200b is performed.

Third Embodiment

Differences of a third embodiment from the above-described embodiments will be mainly described. The present embodiment is an embodiment that relates to details of above-described three dimensional arrangement of the base station apparatuses 200 (see, for example, FIG. 1). The present embodiment can be implemented in combination with the above-described first embodiment or the variations thereof.

Configuration Example of Light Communication System

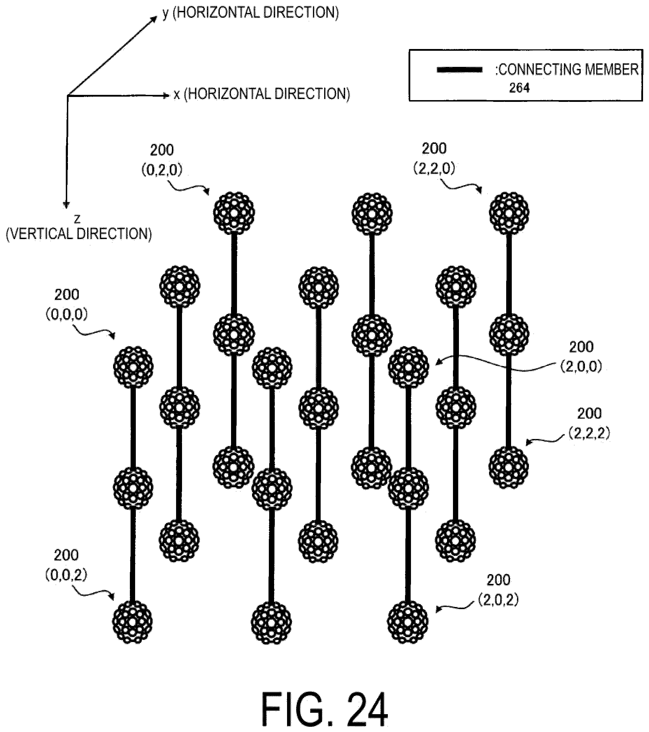

FIG. 24 is a diagram illustrating a configuration example of the light communication system 1 according to the present embodiment. As described above, the light communication system 1 is a light communication system that performs light communication between the base station apparatuses 200 and the terminal apparatus 100, and includes the terminal apparatus 100 and the plurality of base station apparatuses 200.

As illustrated in FIG. 24, the light communication system 1 according to the present embodiment includes the plurality of base station apparatuses 200 three-dimensionally arranged underwater at intervals in the horizontal direction and the vertical direction. A communication area formed underwater by each of the plurality of base station apparatuses 200 forms a coverage area of light communication in the light communication system 1. Thus, a wide coverage area can be formed underwater without depending on the position and the direction of the terminal apparatus 100.

In the illustrated example, the three base station apparatuses 200 are arranged in each of an x direction and a y direction that are the horizontal directions and orthogonal to each other, the three base station apparatuses 200 are arranged in a z direction that is the vertical direction (depth direction), and the 27 base station apparatuses 200 in total are arranged underwater. In the illustrated example, distances between the base station apparatuses 200 (also referred to as "inter-base station distances") are equal. In FIG. 24, in a three dimensional coordinate space (x, y, z) in the x direction, the y direction, and the z direction, the base station apparatus 200 located at the origin (0, 0, 0) is illustrated as the base station apparatus 200 (0, 0, 0), and different base stations are also illustrated likewise.

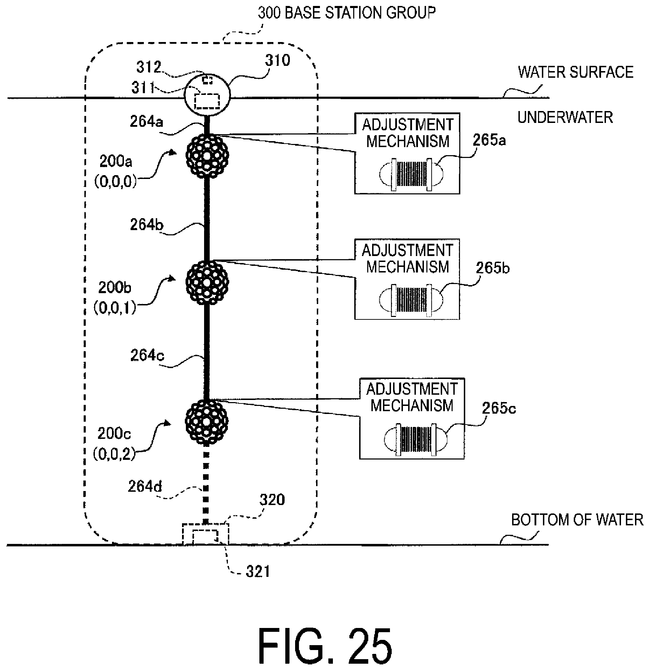

The base station apparatus 200 (0, 0, 0) to the base station apparatus 200 (2, 2, 2) form a plurality of base station groups 300 arranged at intervals in the horizontal direction (see FIG. 25). Each base station group 300 includes the plurality of base station apparatuses 200 (the three base station apparatuses 200 in the illustrated example) arranged in the vertical direction. In each base station group 300, the base station apparatuses 200 whose communication areas are adjacent in the vertical direction are connected by a connecting member 264. In the present embodiment, the connecting member 264 is a member that can be wound and unwound, and is, for example, the above-described rope 261 and/or cable 262. The rope 261 may be a wire rope. Hereinafter, an example where the connecting member 264 includes the wire rope will be mainly described.

FIG. 25 is a diagram illustrating a configuration example of the base station group 300. Each base station group 300 includes the two or more base station apparatuses 200 (the three base station apparatuses 200 in the illustrated example) that are arranged at intervals in the vertical direction, and connecting members 264 that are provided between the base station apparatuses 200 whose communication areas are adjacent in the vertical direction and connect the base station apparatuses 200 in the vertical direction. In the illustrated example, the base station apparatus 200a closest to the water surface is suspended from a floating member (buoy) 310 by a connecting member 264a on the water surface. The base station apparatus 200b is suspended from the base station apparatus 200a by a connecting member 264b. The base station apparatus 200c is suspended from the base station apparatus 200b by a connecting member 264c. Such a configuration enables efficient arrangement of the base station apparatuses 200 underwater in the horizontal direction even if there is no wall surface or the like underwater.

In this regard, the base station apparatus 200a may be integrated with the floating member 310, and the base station apparatus 200a may be arranged on the water surface. In this case, the base station apparatus 200a may have a hemispherical configuration instead of the spherical configuration (see FIG. 1).

In each base station group 300, the base station apparatus 200c located at the deepest position may be connected with a weight member 320 at the bottom of water with a connecting member 264d interposed therebetween. In this regard, if each base station apparatus 200c has a sufficient weight, the weight member 320 may be unnecessary.

Each base station apparatus 200 (the base station apparatus 200a to the base station apparatus 200c) has an upper portion provided with an adjustment mechanism 265 that winds and unwinds the connecting member 264. The adjustment mechanism 265 may be an electric winch. The adjustment mechanism 265 for adjustment can adjust the inter-base station distance in the vertical direction.

More specifically, the upper portion of the base station apparatus 200a is provided with an adjustment mechanism 265a that winds and unwinds the connecting member 264a. The adjustment mechanism 265a may be controlled by the controller 230 of the base station apparatus 200a. The upper portion of the base station apparatus 200b is provided with an adjustment mechanism 265b that winds and unwinds the connecting member 264b. The adjustment mechanism 265b may be controlled by the controller 230 of the base station apparatus 200b. The upper portion of the base station apparatus 200c is provided with an adjustment mechanism 265c that winds and unwinds the connecting member 264c. The adjustment mechanism 265c may be controlled by the controller 230 of the base station apparatus 200c.

In this regard, the disclosure is not limited to the configuration where the adjustment mechanism 265 is provided to the upper portion of each base station apparatus 200, and the adjustment mechanism 265 may be provided to a lower portion of each base station apparatus 200. The disclosure is not limited to the configuration where the connecting member 264 can be wound and unwound, and a slide mechanism that is the adjustment mechanism 265 may be provided to the connecting member 264 to enable the connecting member 264 to extend and contract. The connecting member 264 may be continuously provided in the vertical direction so as to pass through the center of each base station apparatus 200, and the base station apparatus 200 may be moved (slid) on the connecting member 264 to move the base station apparatus 200 in the vertical direction. In this case, the slide mechanism that is the adjustment mechanism may be provided in the base station apparatus 200.

The floating member 310 may have a movement mechanism 311 for moving the base station group 300 in the horizontal direction. The movement mechanism 311 may include a motor and a screw. When the movement mechanism 311 moves the floating member 310 on the water surface, the base station group 300 (the base station apparatus 200a to the base station apparatus 200c) moves in the horizontal direction in response to the movement of the floating member 310. The movement mechanism 311 may be controlled by the controller 230 of the base station apparatus 200a via, for example, the connecting member 264a (cable).

When the base station group 300 includes the weight member 320, the weight member 320 may include a movement mechanism 321 for moving the base station group 300 in the horizontal direction. The movement mechanism 321 may include a motor and a crawler (caterpillar). When the movement mechanism 321 moves the weight member 320 on the bottom of water, the base station group 300 (the base station apparatus 200a to the base station apparatus 200c) moves in the horizontal direction in response to the movement of the weight member 320. The movement mechanism 321 may be controlled by the controller 230 of the base station apparatus 200c via, for example, the connecting member 264d (cable).

In each base station group 300, a base station apparatus pair adjacent in the vertical direction can perform backhaul communication between the base stations via a connecting member 264 (cable) that connects the base station apparatus pair. For example, a pair of the base station apparatus 200a and the base station apparatus 200b can communicate via the connecting member 264b. The pair of base station apparatus 200b and the base station apparatus 200c can communicate via the connecting member 264c. There may be employed a configuration where, instead of inter-base station communication via the connecting member 264 (cable), inter-base station communication is performed using the above-described laser communication device 263 (see FIG. 6).

The base station group 300 performs backhaul communication with the network 10 side. For example, the base station apparatus 200a may perform wireless communication with the network 10 using radio waves. In this regard, radio waves greatly attenuate underwater, and therefore it may be inappropriate to provide an antenna to the base station apparatus 200a underwater. Hence, in the illustrated example, an antenna 312 of the network communicator 241 (see FIG. 3) of the base station apparatus 200a is provided to the floating member 310. In this regard, when the base station apparatus 200a is arranged on the water surface, the antenna 312 for backhaul communication can be provided to the base station apparatus 200a.

The base station apparatus 200a performs direct backhaul communication with the network 10. The base station apparatus 200b performs indirect backhaul communication with the network 10 via the base station apparatus 200a. The base station apparatus 200c performs indirect backhaul communication with the network 10 via the base station apparatus 200a and the base station apparatus 200b.

Station Installation Design of Light Communication System

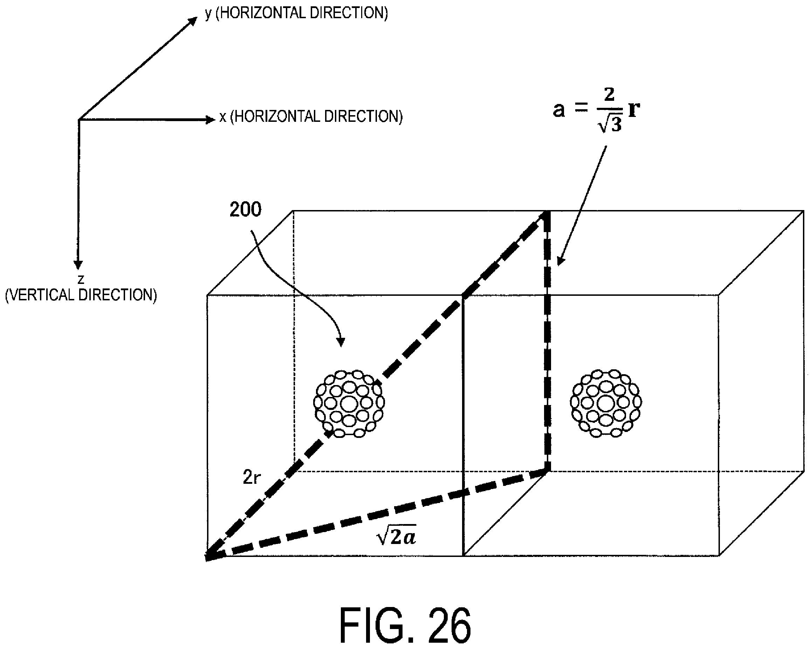

FIGs. 26 to 29 are diagrams for explaining station installation design of the light communication system 1 according to the present embodiment.

A conventional communication system that performs wireless communication using radio waves on the ground forms a two dimensional coverage area in the horizontal direction. According to station installation design of the conventional communication system, base station apparatuses are arranged so as to fill coverage areas with regular hexagonal communication areas that are called cells.

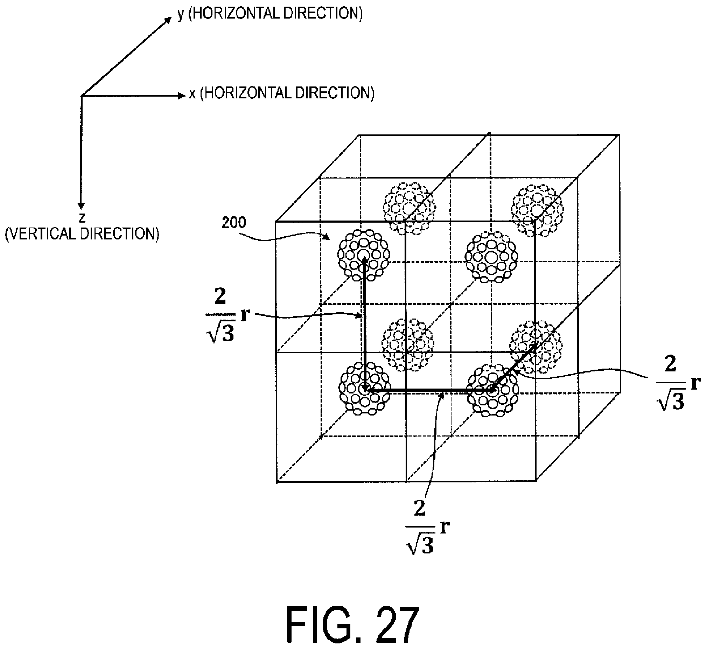

By contrast with this, as illustrated in FIGs. 26 and 27, the light communication system 1 according to the present embodiment regards as a cubic shape the communication area formed by each of the plurality of base station apparatuses 200 to make the station installation design. More specifically, the plurality of base station apparatuses 200 are arranged underwater such that communication areas of the cubic shapes are aligned in the horizontal direction and the vertical direction to fill the coverage area.

As illustrated in FIG. 26, when it is assumed that the actual communication area of the base station apparatus 200 is a sphere having a radius "r", a virtual communication area of each base station apparatus 200 has a cubic shape whose length "a" of one side is

[Mathematical 1]

$$\frac{2}{\sqrt{3}}r$$

Each base station apparatus 200 is arranged such that such communication areas of the cubic shapes are aligned in the horizontal direction and the vertical direction to fill the coverage area. Note that "r" is a communicable distance (also referred to as "communication distance") of the base station apparatus 200. For example, a distance over which a reference signal transmitted by the base station apparatus 200 can be received with a predetermined intensity or more is a communication distance.

As a result, as illustrated in FIG. 27, the inter-base station distances in the horizontal direction and the vertical direction are set to

[Mathematical 2]

$$\frac{2}{\sqrt{3}}r$$

By configuring the inter-base station distances and arranging the plurality of base station apparatuses 200 underwater in this way, a wide coverage area can be efficiently covered by the plurality of base station apparatuses 200.

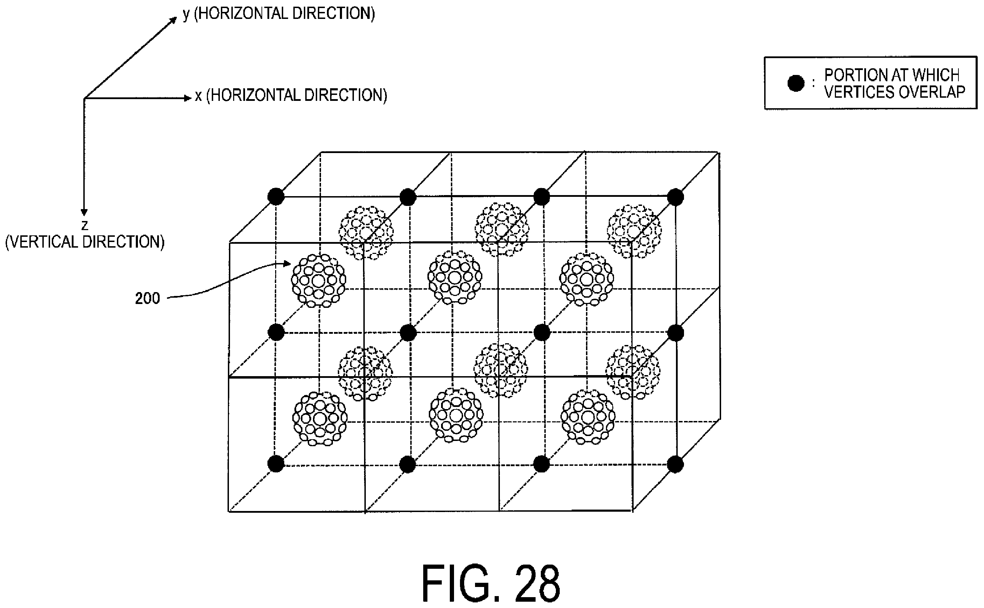

It is assumed that the base station apparatus 200 arranged underwater moves due to an influence of waves and ocean currents. When the base station apparatus 200 moves, coverage holes (i.e., dead zones) may be produced within a coverage area. As illustrated in FIG. 28, locations at which the vertices of the respective communication areas of the cubic shapes overlap are locations at which the end portions of the actual communication areas of the respective base station apparatuses 200 concentrate, and may be locations at which the communication statuses become extremely poor. Hence, when the base station apparatus 200 moves, locations at which the vertices of the respective communication areas of the cubic shapes overlap are likely to become coverage holes.

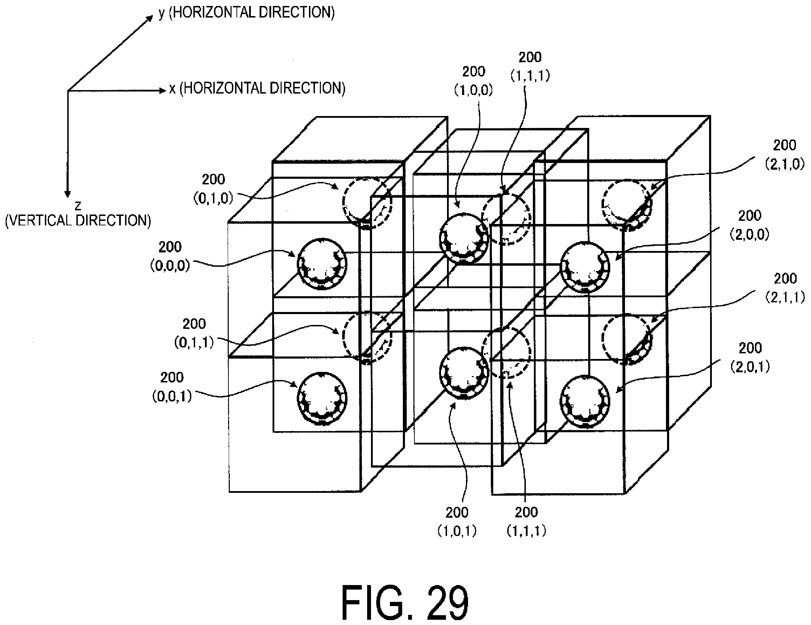

In the present embodiment, as illustrated in FIG. 29, when the communication area of each base station apparatus 200 is regarded as a cube and arranged, each base station apparatus 200 is shifted and arranged such that the vertices of the cubes do not overlap as much as possible. More specifically, in two communication areas of the cubic shapes adjacent in the horizontal direction or the vertical direction, the plurality of base station apparatuses 200 are arranged underwater such that each vertex of the one communication area in the cubic shape does not overlap each vertex of the other communication area in the cubic shape. Thus, the base station apparatus 200 can be arranged such that vertices (ends of communication areas) do not concentrate, so that a dead zone is hardly produced even when the base station apparatus 200 moves.

In the illustrated example, in two communication areas of the cubic shapes adjacent in the horizontal direction, the base station apparatus 200 that is in charge of the other communication area in the cubic shape is shifted by a predetermined amount in the vertical direction (and/or horizontal direction) from the base station apparatus 200 that is in charge of the one communication area in the cubic shape, and arranged. Such a shift amount in the vertical direction is also referred to as a dead zone adjustment amount $\alpha$.

For example, the base station apparatuses 200 (0, 0, 0) and 200 (0,0,1) adjacent in the z direction and the base station apparatuses 200 (1, 0, 0) and 200 (1, 0, 1) adjacent in the z direction are adjacent in the x direction. The base station apparatuses 200 (1, 0, 0) and 200 (1, 0, 1) are shifted only by a predetermined amount in the z direction and the y direction from the base station apparatuses 200 (0, 0, 0) and 200 (0, 0, 1), and arranged.

For example, the base station apparatuses 200 (0, 0, 0) and 200 (0, 0, 1) adjacent in the z direction and the base station apparatuses 200 (0, 1, 0) and 200 (0, 1, 1) adjacent in the z direction are adjacent in the y direction. The base station apparatuses 200 (0, 1, 0) and 200 (0, 1, 1) are shifted only by a predetermined amount in the vertical direction (z direction) from the base station apparatuses 200 (0, 0, 0) and 200 (0, 0, 1), and arranged.

Note that a shifting direction may be any three dimensional direction, and the communication areas of cubic shapes may be shifted and arranged without gaps. It can be also said that each communication area in the cubic shape is arranged such that the vertex overlaps only one of the adjacent communication areas of the cubic shapes.

Installation of each base station apparatus 200 in water may be performed by a worker. After each base station apparatus 200 is installed underwater, each base station apparatus 200 may autonomously adjust the inter-base station distance taking a communication environment into account. Such an autonomous adjustment operation will be described below.

Support for Movement of Base Station Apparatus in Horizontal Direction

As described above, the base station apparatuses 200 adjacent in the vertical direction are physically connected with the connecting member 264 interposed therebetween. However, the base station apparatuses 200 adjacent in the horizontal direction are not physically connected with the connecting member 264 interposed therebetween. Therefore, the base station apparatus 200 has difficulty in moving in the vertical direction, yet easily moves in the horizontal direction due to the influence of waves and ocean currents.

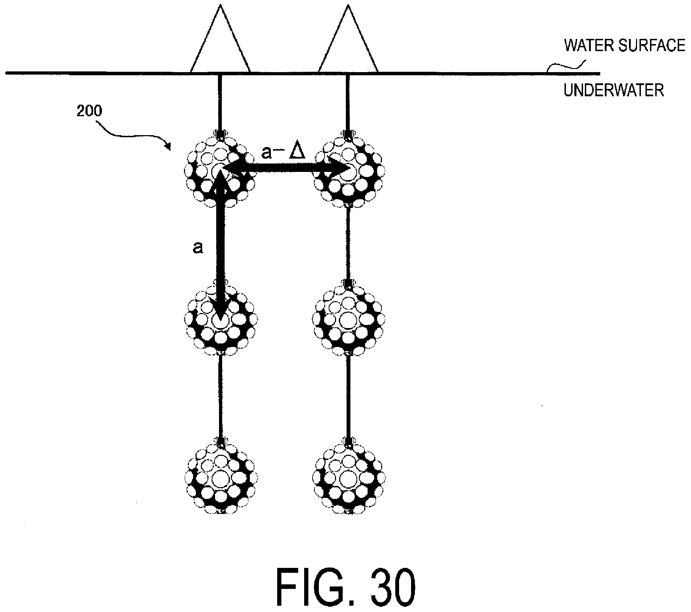

FIG. 30 is a diagram for explaining support for movement of the base station apparatus 200 in the horizontal direction.

In the present embodiment, the plurality of base station apparatuses 200 are arranged underwater such that the inter-base station distance in the horizontal direction is a predetermined distance "Δ" shorter than the inter-base station distance in the vertical direction. The predetermined distance Δ is also referred to as a horizontal direction adjustment amount. More specifically, assuming that the inter-base station distance in the vertical direction is "a", the inter-base station distance in the horizontal direction is "a - Δ". By arranging each base station apparatus 200 in this way, an overlapping region of the communication areas of the base station apparatuses 200 in the horizontal direction can be expanded, and a dead zone is hardly produced even when each base station apparatus 200 moves in the horizontal direction.

The horizontal direction adjustment amount Δ may be configured based on an environmental parameter indicating at least one selected from the group consisting of the height of a wave, the strength of wind on water, and the speed of a water flow, in the coverage area of the light communication system 1. For example, the horizontal direction adjustment amount Δ may be increased as a value of the environmental parameter increases. The horizontal direction adjustment amount Δ may be determined by any one of the base station apparatuses 200 or may be determined by a base station management apparatus (e.g., server apparatus) provided on the network 10.

Adjustment Operation of Inter-Base Station Distance That Takes Communication Environment Into Account

At a time of light communication in water, it is assumed that a communication distance changes depending on a place (sea area/water area) or a time due to an influence of turbidity in water or solar noise. Hence, when the base station apparatuses 200 are arranged, it is desired to appropriately determine and configure the communication distances and the inter-base station distance of the base station apparatus 200 based on environmental information (environmental parameters) such as the turbidity and the solar noise.

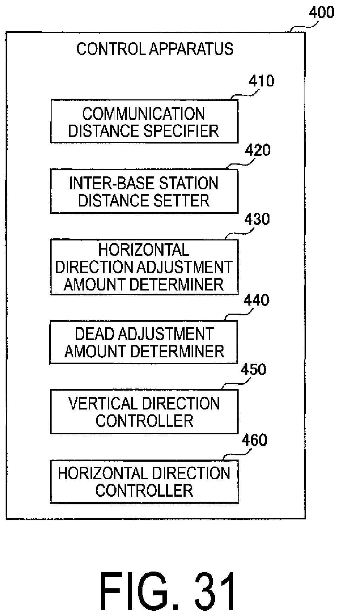

FIG. 31 is a diagram illustrating a configuration example of functional blocks of the control apparatus 400 for determining and configuring the communication distances and the inter-base station distances of the base station apparatuses 200.

The control apparatus 400 may include the controller 230 of each base station apparatus 200. That is, each base station apparatus 200 may have a function of the control apparatus 400. Only the specific base station apparatus 200 among the plurality of base station apparatuses 200 may have the function of the control apparatus 400, and the specific base station apparatus 200 may determine and configure the communication distances and the inter-base station distances for different base station apparatuses 200. A base station management apparatus (e.g., server apparatus) provided on the network 10 may have the function of the control apparatus 400, and the base station management apparatus may determine and configure the communication distance and the inter-base station distance for each base station apparatus 200.

The control apparatus 400 may determine and configure the communication distances and the inter-base station distances of the base station apparatuses 200 at a time of initial installation of each base station apparatus 200 in water. The control apparatus 400 may determine and configure to periodically update the communication distances and the inter-base station distances of the base station apparatuses 200 after initial installation of each base station apparatus 200 in water.

The control apparatus 400 includes a communication distance specifier 410, an inter-base station distance setter 420, a horizontal direction adjustment amount determiner 430, a dead zone adjustment amount determiner 440, a vertical direction controller 450 (first controller), and a horizontal direction controller 460 (second controller).

The communication distance specifier 410 specifies a communication distance of light communication of the base station apparatuses 200 constituting the base station apparatus pair by performing light communication between the base station apparatus pair whose communication areas are adjacent in the vertical direction.

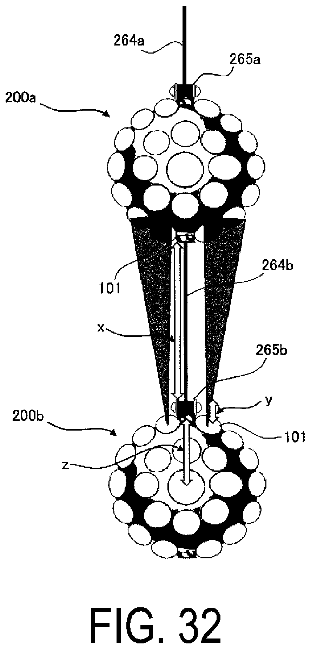

FIG. 32 is a diagram for explaining an operation of specifying a communication distance of light communication of the base station apparatus 200. As illustrated in FIG. 32, the base station apparatus 200a on the upper side and the base station apparatus 200b on the lower side form a base station apparatus pair. The light communicator 201 (light emitter 220) at the upper portion of the base station apparatus 200b transmits a reference light signal upward. The light communicator 201 (light receiver 210) at the lower portion of the base station apparatus 200a receives the reference light signal. The controller 230 of the base station apparatus 200a measures the reception intensity of the reference light signal. The controller 230 of the base station apparatus 200b uses the adjustment mechanism 265b to gradually increase the length (a wire length in the present embodiment) of the connecting member 264b between the base station apparatus 200a and the base station apparatus 200b.

The communication distance specifier 410 specifies a wire length "x" when the reception intensity measured by the base station apparatus 200a becomes the threshold value or less, and specifies the communication distance (radius "r") based on the wire length "x". In a case where, for example, the radius of the base station is "z" and a correction value corresponding to the height of the adjustment mechanism 265 is "y", if the center of the base station is set as a starting point, the communication distance (radius "r") is calculated according to $r = x + y + z$. In this regard, "z" and "y" are predetermined fixed values.

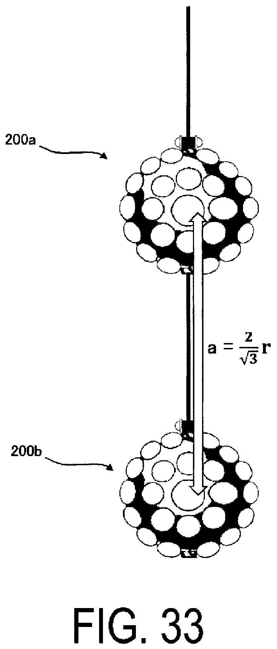

The inter-base station distance setter 420 configures the inter-base station distance in each of the horizontal direction and the vertical direction based on the communication distance "r" specified by the communication distance specifier 410. FIG. 33 is a diagram for explaining an operation of calculating an inter-base station distance. As described above, the inter-base station distance "a" is calculated according to

[Mathematical 3]

$$a = \frac{2}{\sqrt{3}} r$$

The inter-base station distance setter 420 may calculate and configure the wire length "x" according to

$$x = a - 2z$$

taking the radius "z" of the base station into account.

The inter-base station distance setter 420 may calculate and configure the wire length "x" according to

$$x = a - 2z - y$$

further taking a correction value "y", too, corresponding to the height of the adjustment mechanism 265 into account.

The inter-base station distance setter 420 may notify each base station apparatus 200 of the calculated and configured inter-base station distance "a" and/or wire length "x".

The horizontal direction adjustment amount determiner 430 determines the horizontal direction adjustment amount Δ for supporting movement of the base station apparatus 200 in the horizontal direction. The horizontal direction adjustment amount determiner 430 determines the horizontal direction adjustment amount Δ based on the environmental parameter indicating at least one selected from the group consisting of the height of a wave, the strength of wind on water, and the speed of a water flow, in the coverage area of the light communication system 1 (see FIG. 30). The horizontal direction adjustment amount determiner 430 may acquire the environmental parameter using a sensor provided to the base station apparatus 200 or the floating member 310, or may acquire the environmental parameter from the server apparatus that manages environmental parameters. As a result, the inter-base station distance in the horizontal direction is set to "a - Δ".

The dead zone adjustment amount determiner 440 determines a dead zone adjustment amount (shift amount) α for arranging the base station apparatus 200 such that the vertex of each communication area in the cubic shape does not concentrate. The dead zone adjustment amount determiner 440 may determine the dead zone adjustment amount α based on the environmental parameter similarly to the horizontal direction adjustment amount determiner 430.

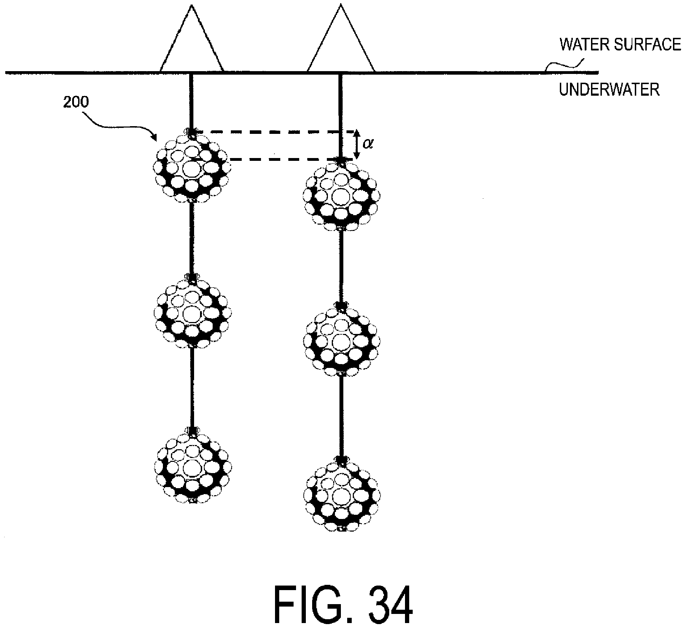

FIG. 34 is a diagram for explaining the dead zone adjustment amount α in the vertical direction. In the illustrated example, the base station apparatuses 200 are arranged such that the positions of the base station apparatuses adjacent in the horizontal direction are shifted by α in the vertical direction. For example, the base station apparatus 200 closest to the water surface in each base station group 300 is adjusted using the adjustment mechanism 265 such that the position thereof is shifted by α in the vertical direction.

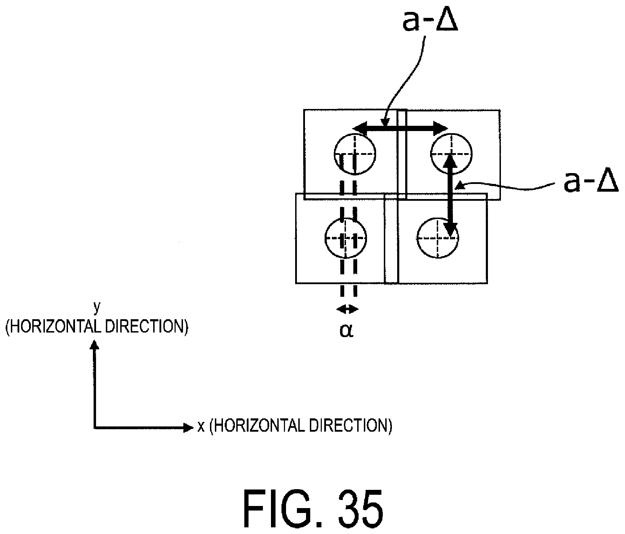

FIG. 35 is a diagram for explaining the dead zone adjustment amount α in the horizontal direction. In the illustrated example, the respective base station apparatuses 200 are arranged such that the positions of the base station apparatuses adjacent in the y direction are shifted by α in the x direction. For example, the movement mechanism 311 provided to the floating member 310 and/or the movement mechanism 321 provided to the weight member 320 perform adjustment of shifting the position by α in the horizontal direction.

The vertical direction controller 450 adjusts the position of the base station apparatus 200 in the vertical direction by controlling the adjustment mechanism 265 based on the inter-base station distance "a" (and/or the wire length "x") configured by the inter-base station distance setter 420 and the dead zone adjustment amount α in the vertical direction.

The horizontal direction controller 460 adjusts the position of the base station apparatus 200 in the horizontal direction by controlling the movement mechanism 311 and/or the movement mechanism 321 based on the inter-base station distance "a" configured by the inter-base station distance setter 420, the horizontal direction adjustment amount "Δ" determined by the horizontal direction adjustment amount determiner 430, and the dead zone adjustment amount "α" in the horizontal direction.

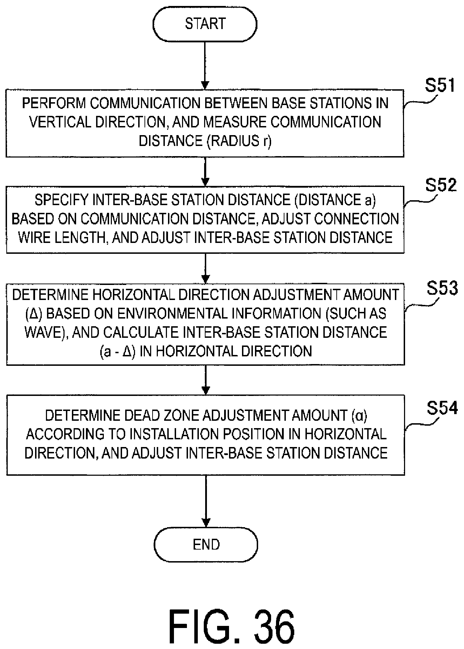

FIG. 36 is a diagram illustrating a flow example at a time of initial installation of each base station apparatus 200.

In step S51, the communication distance specifier 410 specifies a communication distance (radius "r") of light communication of the base station apparatuses 200 constituting the base station apparatus pair by performing the light communication between the base station apparatus pair whose communication areas are adjacent in the vertical direction.

In step S52, the inter-base station distance setter 420 configures the inter-base station distance "a" in the horizontal direction and the vertical direction based on the communication distance "r" specified by the communication distance specifier 410. For example, the inter-base station distance setter 420 notifies each base station apparatus 200 of the inter-base station distance "a", and each base station apparatus 200 can adjust the inter-base station distance in the vertical direction by adjusting the wire length using the adjustment mechanism 265.

In step S53, the horizontal direction adjustment amount determiner 430 determines the horizontal direction adjustment amount Δ based on an environmental parameter (environmental information) indicating at least one selected from the group consisting of the height of a wave, the strength of wind on water, and the speed of a water flow, in the coverage area of the light communication system 1, and calculates an inter-base station distance "a - Δ" in the horizontal direction. For example, the inter-base station distance setter 420 notifies each base station apparatus 200 of the horizontal direction adjustment amount Δ, and each base station apparatus 200 moves the floating member 310 and/or the weight member 320 using the movement mechanism 311 and/or the movement mechanism 321, so that the inter-base station distance in the horizontal direction can be adjusted.

In step S54, the dead zone adjustment amount determiner 440 determines the dead zone adjustment amount (shift amount) α for arranging the base station apparatus 200 such that the vertices of the respective communication areas of the cubic shapes do not concentrate. For example, the dead zone adjustment amount determiner 440 notifies each base station apparatus 200 of the dead zone adjustment amount α, and each base station apparatus 200 can adjust the position of each base station apparatus 200 in the vertical direction and the horizontal direction using the adjustment mechanism 265 (and the movement mechanisms 311 and 321).

First Variation of Third Embodiment

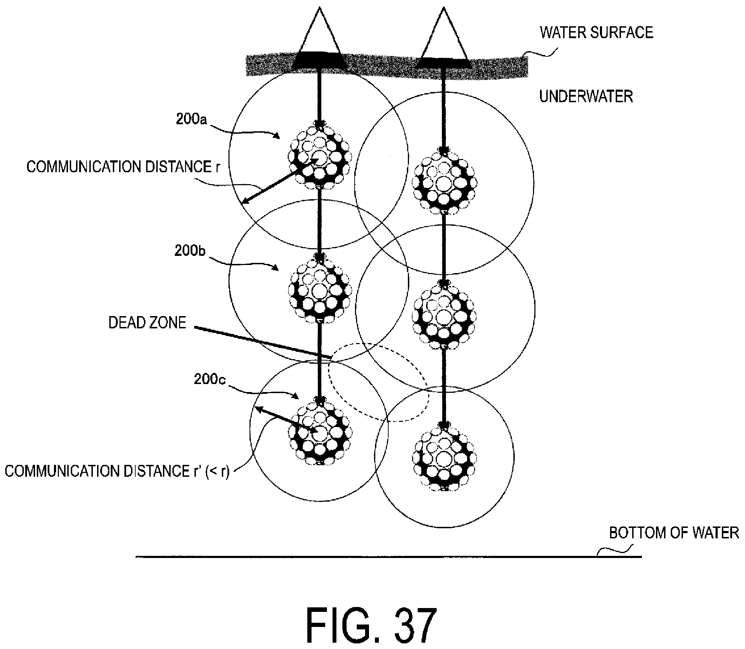

FIG. 37 explains an operation according to the first variation of the third embodiment.

In the above-described third embodiment, it has been assumed that the communication distances "r" of the base station apparatuses 200 are equal. However, when, for example, the position of the base station apparatus 200 is close to the bottom of water, turbidity may be high and the communication distance "r" may be short. In the illustrated example, while the communication distance of the base station apparatus 200a close to the water surface is "r", the communication distance of the base station apparatus 200c close to the bottom of water is "r'". Here, the communication distance "r'" is shorter than the communication distance "r". Therefore, a dead zone (coverage hole) is produced outside the communication area of the base station apparatus 200c.

When the inter-base station distance is configured without taking into account such a difference in the communication distance "r" of each base station apparatus 200, it is concerned that a dead zone is produced in the coverage area. Hence, in the present variation, an operation that can support the difference in communication distance "r" for each base station apparatus 200 is performed.

In the present variation, the communication distance specifier 410 specifies the communication distance for each of a plurality of base station apparatus pairs by performing light communication with the plurality of base station apparatus pairs whose communication areas are adjacent in the vertical direction. The communication distance specifier 410 specifies the shortest communication distance among the communication distances specified for the plurality of base station apparatus pairs. In the illustrated example, the communication distance specifier 410 specifies the communication distance "r'" as the shortest communication distance. Based on the shortest communication distance "r'" specified by the communication distance specifier 410, the inter-base station distance setter 420 configures at least the inter-base station distance in the horizontal direction.

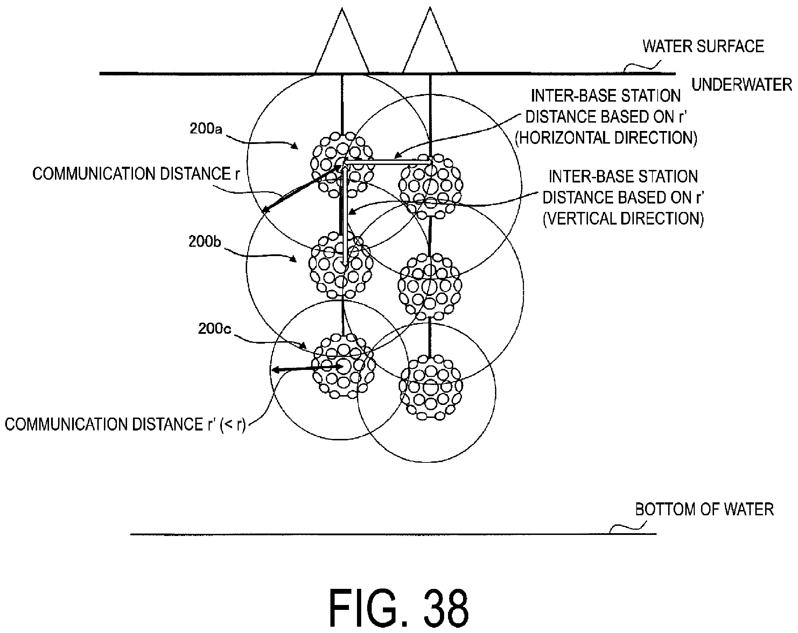

FIG. 38 is a diagram illustrating a first configuration pattern of the inter-base station distance according to the present variation. In this configuration pattern, the inter-base station distance setter 420 configures the respective inter-base station distances in the horizontal direction and the vertical direction based on the shortest communication distance "r'". More specifically, the inter-base station distance setter 420 calculates and configures the respective inter-base station distances in the horizontal direction and the vertical direction according to

[Mathematical 4]

$$a = \frac{2}{\sqrt{3}} r'$$

In this regard, in this configuration pattern, the inter-base station distance is uniformly reduced, and therefore the communication area in the vertical direction in which no dead zone has been produced is also reduced.

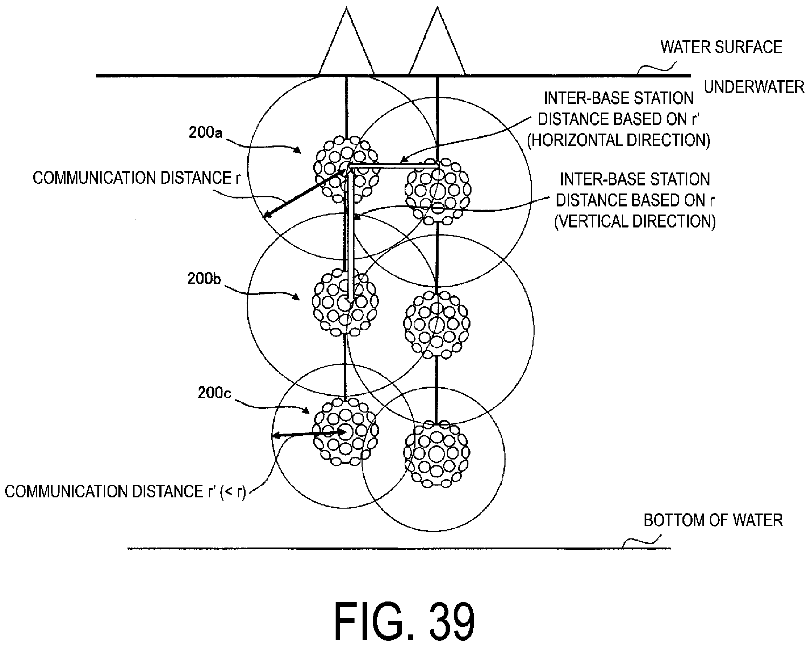

FIG. 39 is a diagram illustrating a second configuration pattern of the inter-base station distance according to the present variation. In this configuration pattern, the inter-base station distance setter 420 configures the inter-base station distance only in the horizontal direction based on the shortest communication distance "r'", and configures the inter-base station distance in the vertical direction based on the communication distance "r" of each base station apparatus pair per base station apparatus pair including the base station apparatuses 200 adjacent in the vertical direction. For example, the inter-base station distance in the vertical direction between the base station apparatus 200a and the base station apparatus 200b is configured based on the communication distance r specified between the base station apparatus 200a and the base station apparatus 200b. The inter-base station distance in the vertical direction between the base station apparatus 200b and the base station apparatus 200c is configured based on the communication distance r specified between the base station apparatus 200b and the base station apparatus 200c. As described above, in this configuration pattern, the inter-base station distance setter 420 reduces the inter-base station distance based on the shortest communication distance only in the horizontal direction, and does not reduce the inter-base station distance in the vertical direction by configuring the inter-base station distance based on the communication distance per base station apparatus pair.

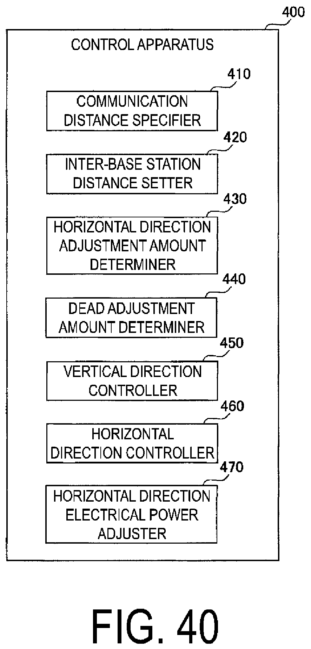

However, in both the first configuration pattern and the second configuration pattern, reducing the inter-base station distance in the horizontal direction causes a risk that an interference occurs between the base station apparatuses 200 adjacent in the horizontal direction. FIG. 40 is a diagram illustrating a configuration example of the control apparatus 400 according to the present variation. The control apparatus 400 according to the present variation further includes a horizontal direction electrical power adjuster 470 that configures lower light signal transmission electrical power of the base station apparatus 200 in the horizontal direction than light signal transmission electrical power of the base station apparatus 200 in the vertical direction.

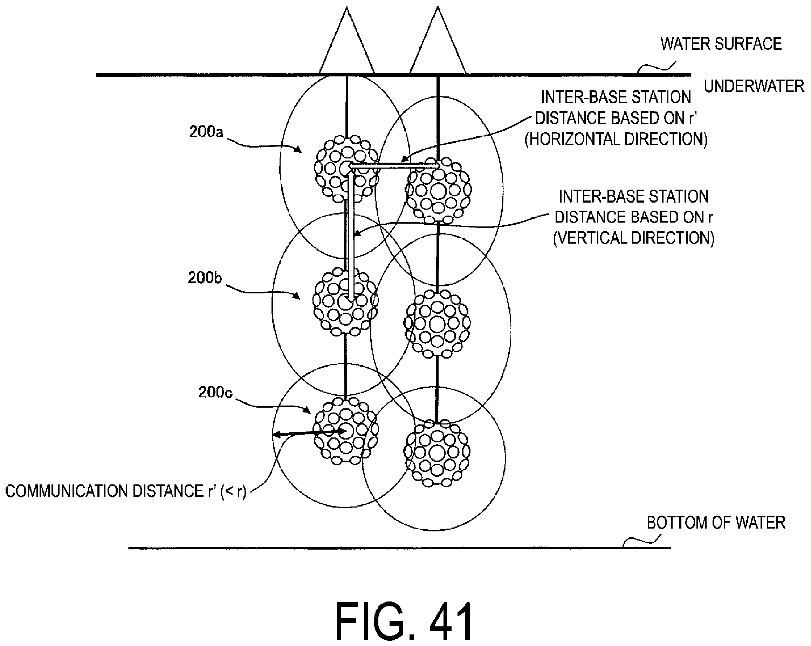

FIG. 41 is a diagram illustrating a third configuration pattern of the inter-base station distance according to the present variation. In this configuration pattern, the inter-base station distance setter 420 configures the inter-base station distance only in the horizontal direction based on the shortest communication distance "r'" similarly to the above-described second configuration pattern, and configures the inter-base station distance in the vertical direction based on the communication distance "r" of each base station apparatus pair per base station apparatus pair including the base station apparatuses 200 adjacent in the vertical direction. For example, the inter-base station distance in the vertical direction between the base station apparatus 200a and the base station apparatus 200b is configured based on the communication distance r specified between the base station apparatus 200a and the base station apparatus 200b. The inter-base station distance in the vertical direction between the base station apparatus 200b and the base station apparatus 200c is configured based on the communication distance r specified between the base station apparatus 200b

and the base station apparatus 200c. The horizontal direction electrical power adjuster 470 configures lower light signal transmission electrical power of the base station apparatus 200 in the horizontal direction than light signal transmission electrical power of the base station apparatus 200 in the vertical direction. In the illustrated example, the base station apparatus 200c closest to the bottom of water originally has the shortest communication distance, and does not cause an interference between the base station apparatuses adjacent in the horizontal direction, and therefore the light signal transmission electrical power of the base station apparatus 200 in the horizontal direction is not lowered.

Second Variation of Third Embodiment

As described above, the communicable distance may vary depending on a position of a base station. Depending on the purpose of underwater communication, there is a probability that securing a wide communication area at a specific position is prioritized, and a dead zone (coverage hole) at other positions is allowed. In this case, when the terminal apparatus 100 as a remote operation target such as an underwater drone moves to a dead zone, communication disconnection may occur and the terminal apparatus 100 may become uncontrollable.

In the present variation, part of the base station apparatuses 200 whose communication distances of light communication are shorter than those of different base station apparatuses 200 among the plurality of base station apparatuses 200 transmit light signals (also referred to as "dead zone alarms") for giving a notification of a probability that the outside of the communication areas of the part of the base station apparatuses 200 are coverage holes. The terminal apparatus 100 that has received the light signal (dead zone alarm) performs control for maintaining the terminal apparatus 100 in the communication area or control for returning to the communication area when the terminal apparatus 100 moves from the communication area to the coverage hole. Thus, occurrence of communication disconnection between the terminal apparatus 100 and the base station apparatus 200 can be suppressed.

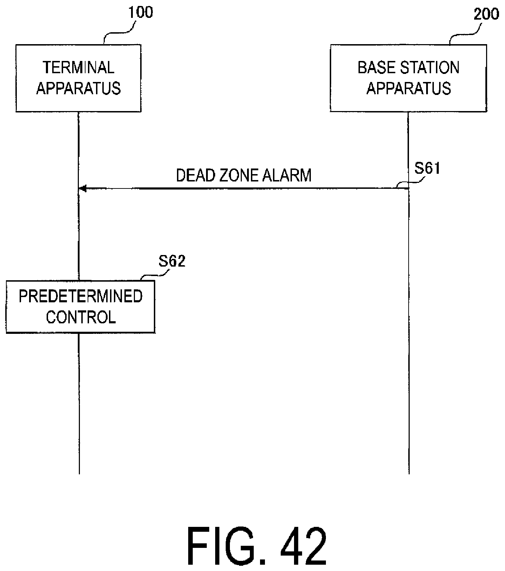

FIG. 42 is a diagram illustrating an operation example of the light communication system 1 according to the present variation. In the illustrated example, it is assumed that the base station apparatus 200 is not the base station apparatus 200 that prioritizes securing of a wide communication area, but has a shorter communication distance than that of the base station apparatus 200.

In step S61, the base station apparatus 200 broadcasts, in the own communication area, information (dead zone alarm) indicating that there is a concern that a dead zone is produced. In this regard, the base station apparatus 200 may transmit by unicast the dead zone alarm to the terminal apparatus 100 communicating with the base station apparatus 200. The terminal apparatus 100 receives the dead zone alarm from the base station apparatus 200.

In step S62, the terminal apparatus 100 performs predetermined control based on the dead zone alarm. The predetermined control is control for maintaining the terminal apparatus 100 in the communication area or control for returning the terminal apparatus 100 to the communication area when the terminal apparatus 100 moves from the communication area to the dead zone. For example, the terminal apparatus 100 may move toward the direction of the base station apparatus 200 such that the terminal apparatus 100 does not enter the dead zone. The terminal apparatus 100 may perform control for returning to the communication area by autonomous control when entering the dead zone. For example, the terminal apparatus 100 may store the direction of the base station apparatus 200, and move toward the direction when entering the dead zone. When entering the dead zone, the terminal apparatus 100 may limit a moving speed or stop to avoid entering deep into the dead zone. The terminal apparatus 100 may transmit an inquiry signal to search for a neighboring base station, specify a direction of a neighboring base station, and move toward the direction.

Third Variation of Third Embodiment

It is assumed that the communication area provided by the base station apparatus 200 is adaptively enlarged or reduced in response to a change in a date and an underwater environment. For example, the communication area may be reduced during the day, and the communication area may be enlarged during the night. The communication area can be reduced on a sunny day, and the communication area may be enlarged on a cloudy day. It is assumed that the communication area is reduced in response to an increase in turbidity due to rainfall or the communication area in the horizontal direction is reduced in response to an influence of strong wind. When the inter-base station distance is adjusted in response to a change in the communication area, it is concerned that the terminal apparatus 100 is located in a dead zone after adjustment depending on the position of the terminal apparatus 100, causes communication disconnection, and becomes uncontrollable.

In the present variation, the target base station apparatus 200 that changes the inter-base station distance in response to the change of the communication area among the plurality of base station apparatuses 200 transmits a first light signal (also referred to as a "communication area change notification") for giving the notification of the change. The terminal apparatus 100 that has received the light signal (communication area change notification) transmits to the target base station apparatus 200 a second light signal indicating whether to permit the change.

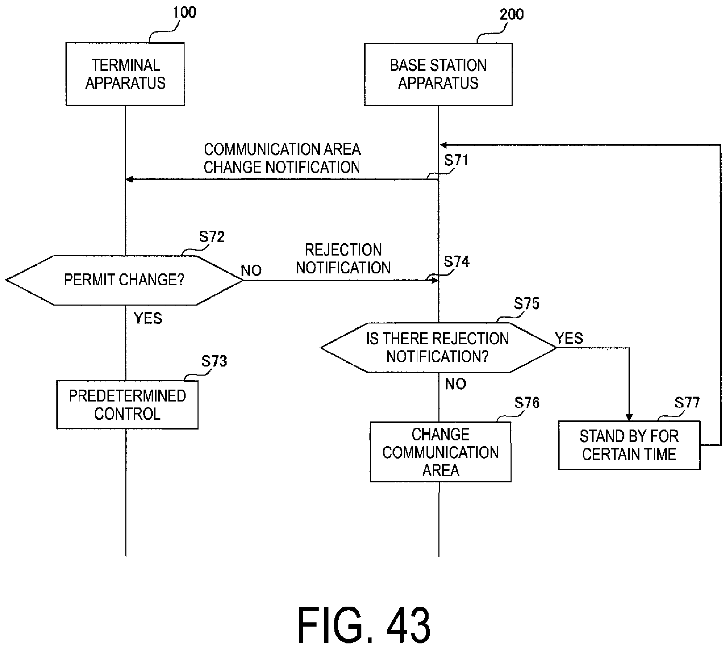

FIG. 43 is a diagram illustrating an operation example of the light communication system 1 according to the present variation. In the illustrated example, it is assumed that the base station apparatus 200 is the base station apparatus 200 that produces a dead zone when the inter-base station distance is changed. This base station apparatus 200 may be, for example, the base station apparatus 200 that is at a coverage area end of the light communication system 1.

In step S71, the base station apparatus 200 broadcasts a communication area change notification in the own communication area. In this regard, the base station apparatus 200 may transmit by unicast the communication area change notification to the terminal apparatus 100 that is communicating with the base station apparatus 200. The terminal apparatus 100 receives the communication area change notification from the base station apparatus 200.

In step S72, the terminal apparatus 100 determines whether to permit the change. When, for example, there is a need that the communication area is not changed for a reason that, for example, work is being performed, the terminal apparatus 100 determines to reject the change.

When it is determined to permit the change (step S72 : YES), the terminal apparatus 100 performs above-described predetermined control in step S73. The terminal apparatus 100 may transmit to the base station apparatus 200 a light signal (permission notification) indicating that the change is permitted.

On the other hand, when it is determined to reject the change (step S72 : NO), the terminal apparatus 100 transmits a light signal (rejection notification) indicating that the change is rejected to the base station apparatus 200 in step S77.

In step S75, the base station apparatus 200 determines whether the rejection notification has been received from the terminal apparatus 100. When it is determined that the rejection notification is not received from the terminal apparatus 100 (step S75 : NO), the base station apparatus 200 changes the communication area (and changes the inter-base station distance) in step S76.

On the other hand, when it is determined that the rejection notification has been received from the terminal apparatus 100 (step S75 : YES), the base station apparatus 200 shares the reception of the rejection notification with the different base station apparatus 200, and stands by for a certain period of time in step S77. After a certain period of time passes, the base station apparatus 200 tries to change the inter-base station distance again.

Other Embodiments

In the above-described embodiments, an example where the terminal apparatus 100 and the base station apparatus 200 are each formed into a spherical shape has been described. However, the terminal apparatus 100 and/or the base station apparatus 200 may be formed into a polyhedron shape. In this case, each surface of the polyhedron may constitute the light communicator, and a set of the light emitting element and the light receiving element may be arranged on each surface. The terminal apparatus 100 and/or the base station apparatus 200 may be formed into a bar shape as a whole. For example, the terminal apparatus 100 and/or the base station apparatus 200 may form a prism, each side surface of the prism may form a light communicator, and a set of a light emitting element and a light receiving element may be arranged at each side surface.

A program that causes a computer to execute each processing performed by the terminal apparatus 100, the base station apparatus 200, or the control apparatus 400 may be provided. The program may be recorded in a computer readable medium. Use of the computer readable medium enables the program to be installed on a computer. Here, the computer readable medium on which the program is recorded may be a non-transitory recording medium. The non-transitory recording medium is not particularly limited, and may be, for example, a recording medium such as a CD-ROM or a DVD-ROM. Circuits for executing each processing performed by the terminal apparatus 100, the base station apparatus 200, or the control apparatus 400 may be integrated, and at least part of the terminal apparatus 100, the base station apparatus 200, or the control apparatus 400 may be configured as a semiconductor integrated circuit (a chipset or an SoC).

The phrases "based on" and "depending on/in response to" used in the present disclosure do not mean "based only on" and "only depending on/in response to", unless specifically stated otherwise. The phrase "based on" means both "based only on" and "based at least in part on". The phrase "depending on/in response to" means both "only depending on" and "based at least in part on". The terms "include" and "comprise" and variations thereof do not mean "include only items stated" but instead mean "may include only items stated" or "may include not only the items stated but also other items". The term "or" used in the present disclosure is not intended to be "exclusive or". Any references to elements using designations such as "first" and "second" used in the present disclosure do not generally limit the quantity or order of those elements. These designations may be used herein as a convenient method of distinguishing between two or more elements. Thus, a reference to first and second elements does not mean that only two elements may be employed there or that the first element needs to precede the second element in some manner. For example, when the English articles such as "a," "an," and "the" are added in the present disclosure through translation, these articles include the plural unless clearly indicated otherwise in context.

Embodiments have been described above in detail with reference to the drawings, but specific configurations are not limited to those described above, and various design variations can be made without departing from the gist of the present disclosure.

Supplementary Note A

Features relating to the above-described embodiments will be described below as supplementary notes.

Supplementary Note 1

A light communication system includes:

a base station apparatus; and
a terminal apparatus configured to perform light communication with the base station apparatus, wherein
the base station apparatus and/or the terminal apparatus is configured to perform connection control that establishes and/or maintains light communication connection between the terminal apparatus and the base station apparatus in such a manner that communication quality of the light communication in an uplink is prioritized over communication quality of the light communication in a downlink.

Supplementary Note 2

In the light communication system described in Supplementary Note 1,

the terminal apparatus includes a controller configured to estimate an uplink communication quality that is reception quality of a light signal of the uplink received by the base station apparatus from the terminal apparatus, and
the controller is configured to use the estimated uplink communication quality for the connection control.

Supplementary Note 3

In the light communication system described in Supplementary Note 2,

the terminal apparatus further includes a plurality of light communicators whose optical axes are directed toward respectively different directions, and
the controller is configured to estimate the uplink communication quality based on reception statuses of the plurality of light communicators.

Supplementary Note 4

In the light communication system described in Supplementary Note 3,

the controller is configured to
measure a reference signal intensity that is a reception intensity of a reference light signal in a first light communicator that receives the reference light signal from the base station apparatus, estimate an ambient light noise intensity that is a reception intensity of ambient light in the base station apparatus based on a reception intensity in a second light communicator different from the first light communicator, and
estimate the uplink communication quality based on the reference signal intensity and the ambient light noise intensity.

Supplementary Note 5

In the light communication system described in Supplementary Note 4,
the second light communicator is a light communicator whose optical axis is directed toward a direction opposite to a direction toward which the first light communicator directs an optical axis.

Supplementary Note 6

In the light communication system described in Supplementary Note 4 o 5,
the controller is configured to estimate the ambient light noise intensity by averaging a plurality of measurement values obtained by measuring the reception intensity in the second light communicator a plurality of times within a predetermined period.

Supplementary Note 7

In the light communication system described in any one of Supplementary Notes 4 to 6,

the controller is configured to
determine whether ambient light is in a shielded state where the ambient light entering the base station apparatus is shielded by the terminal apparatus, and
correct the ambient light noise intensity to a predetermined alternative value when determining that the ambient light is in the shielded state.

Supplementary Note 8

In the light communication system described in Supplementary Note 7,
the controller is configured to determine that the ambient light is in the shielded state based on a fact that a first condition has been satisfied that the ambient light noise intensity is a first threshold or more and at least the reception intensity of the ambient light in the first light communicator is less than a second threshold value.

Supplementary Note 9

In the light communication system described in Supplementary Note 8,

the controller is configured to
acquire a value indicating a distance between the terminal apparatus and the base station apparatus based on the reference signal intensity, and
determine that the ambient light is in the shielded state based on a fact that the first condition is satisfied and the distance is a threshold value or less.

Supplementary Note 10

In the light communication system described in Supplementary Note 8,
the controller is configured to determine that the ambient light is in the shielded state based on a fact that the first condition is satisfied and a reception intensity of ambient light in a light communicator around the second light communicator is less than a threshold value.

Supplementary Note 11

In the light communication system described in any one of Supplementary Notes 7 to 10,
the predetermined alternative value is an average value or a median value of a reception intensity in each of the plurality of light communicators.

Supplementary Note 12

In the light communication system described in any one of Supplementary Notes 7 to 10,

the controller is configured to
acquire, from the base station apparatus, an ambient light noise intensity derived by the base station apparatus, and
the predetermined alternative value is the ambient light noise intensity acquired from the base station apparatus.

Supplementary Note 13

In the light communication system described in any one of Supplementary Notes 4 to 12,

the controller is configured to
acquire, from the base station apparatus, information indicating transmission electrical power of the reference signal in the base station apparatus, and
estimate the uplink communication quality based on the reference signal intensity, the transmission electrical power, and the ambient light noise intensity.

Supplementary Note 14

In the light communication system described in any one of Supplementary Notes 1 to 13,

the controller is configured to
estimate the uplink communication quality for each of a plurality of the base station apparatuses,
select, from the plurality of the base station apparatuses, a base station apparatus whose uplink communication quality satisfies a predetermined criterion, and
try to connect to the selected base station apparatus.

Supplementary Note 15

In the light communication system described in Supplementary Note 14,
the controller is configured to notify the selected base station apparatus of that the terminal apparatus is performing uplink prioritization connection during processing of establishing connection to the selected base station apparatus.

Supplementary Note 16

In the light communication system described in any one of Supplementary Notes 1 to 15,
the base station apparatus is configured to notify the terminal apparatus of whether the base station apparatus can perform the connection control that prioritizes the communication quality of the uplink.

Supplementary Note 17

In the light communication system described in any one of Supplementary Notes 1 to 16,

the base station apparatus is configured to
configure the terminal apparatus to transmit, to the base station apparatus, a measurement report message including information indicating the estimated uplink communication quality, and
determine a handover of the terminal apparatus from the base station apparatus to a different base station apparatus based on the measurement report message from the terminal apparatus.

Supplementary Note 18

In the light communication system described in Supplementary Note 17,
the controller of the terminal apparatus is configured to trigger transmission of the measurement report message to the base station apparatus in response to that the estimated uplink communication quality has satisfied a predetermined trigger condition.

Supplementary Note 19

In the light communication system described in any one of Supplementary Notes 1 to 18,
the base station apparatus is configured to notify, during handover processing of the terminal apparatus from the base station apparatus to a different base station apparatus, the different base station apparatus of that the terminal apparatus is performing uplink prioritization connection.

Supplementary Note 20

A terminal apparatus includes:

a light communicator configured to perform light communication with a base station apparatus; and
a controller configured to perform connection control that establishes and/or maintains light communication connection between the terminal apparatus and the base station apparatus in such a manner that communication quality of the light communication in an uplink is prioritized over communication quality of the light communication in a downlink.

Supplementary Note 21

A base station apparatus includes:

a light communicator configured to perform light communication with a terminal apparatus; and
a controller configured to perform connection control that establishes and/or maintains light communication connection between the terminal apparatus and the base station apparatus in such a manner that communication quality of the light communication in an uplink is prioritized over communication quality of the light communication in a downlink.

Supplementary Note B

Other features relating to the above-described embodiments will be described below as supplementary notes.

Supplementary Note 1

A light communication system configured to perform light communication between a base station apparatus and a terminal apparatus, the light communication system including:

a plurality of base station apparatuses that are three-dimensionally arranged underwater at intervals in a horizontal direction and a vertical direction, wherein
a communication area formed underwater by each of the plurality of base station apparatuses is configured to form a coverage area of the light communication in the light communication system.

Supplementary Note 2

In the light communication system described in Supplementary Note 1,
when the communication area formed by each of the plurality of base station apparatuses is regarded as a cubic shape, the plurality of base station apparatuses are arranged underwater such that the communication area in the cubic shape is aligned in the horizontal direction and the vertical direction to fill the coverage area.

Supplementary Note 3

In the light communication system described in Supplementary Note 2,
in two communication areas of the cubic shapes adjacent in the horizontal direction or the vertical direction, the plurality of base station apparatuses are arranged underwater such that each vertex of the one communication area in the cubic shape does not overlap each vertex of the other communication area in the cubic shape.

Supplementary Note 4

In the light communication system described in any one of Supplementary Notes 1 to 3,

the plurality of base station apparatuses are configured to constitute a plurality of base station groups arranged at intervals in the horizontal direction, and
each of the plurality of base station groups includes
two or more base station apparatuses arranged at intervals in the vertical direction, and
a connecting member provided between base station apparatuses whose communication areas are adjacent in the vertical direction and configured to connect the base station apparatuses in the vertical direction.

Supplementary Note 5

In the light communication system described in Supplementary Note 4,
the plurality of base station apparatuses are arranged underwater such that an inter-base station distance in the horizontal direction is a predetermined distance shorter than an inter-base station distance in the vertical direction.

Supplementary Note 6

The light communication system described in Supplementary Note 5 further includes

a determiner configured to determine the predetermined distance based on an environmental parameter indicating at least one selected from the group consisting of a height of a wave, strength of wind on water, and a speed of a water flow, in the coverage area.

Supplementary Note 7

The light communication system described in any one of Supplementary Notes 4 to 6 further includes:

a specifier configured to specify a communicable distance of light communication of base station apparatuses configured to constitute a base station apparatus pair by performing light communication between the base station apparatuses configured to constitute the base station apparatus pair, the base station apparatuses whose communication areas being adjacent in the vertical direction; and
a setter configured to configure an inter-base station distance in each of the horizontal direction and the vertical direction based on the specified communicable distance.

Supplementary Note 8

The light communication system described in Supplementary Note 7 further includes:

an adjustment mechanism configured to adjust a length of the connecting member; and
a first controller configured to control the adjustment mechanism based on the configured inter-base station distance in the vertical direction.

Supplementary Note 9

The light communication system described in Supplementary Note 7 or 8 further includes:

a movement mechanism configured to move at least one of the plurality of base station groups in the horizontal direction; and
a second controller configured to control the movement mechanism based on the configured distance in the vertical direction.

Supplementary Note 10

In the light communication system described in any one of Supplementary Notes 7 to 9,

the specifier is configured to
specify the communicable distance for each of the plurality of base station apparatus pairs by performing light communication between the base station apparatuses configured to constitute each of the plurality of base station apparatus pairs, the base station apparatuses whose communication areas being adjacent in the vertical direction, and
specify a shortest communicable distance among the communicable distances specified for the plurality of base station apparatus pairs, and
the setter is configured to configure at least an inter-base station distance in the horizontal direction based on the specified shortest communicable distance.

Supplementary Note 11

The light communication system described in Supplementary Note 10 further includes an electrical power adjuster configured to configure light signal transmission electrical power of the base station apparatus in the horizontal direction to be lower than light signal transmission electrical power of the base station apparatus in the vertical direction.

Supplementary Note 12

In the light communication system described in any one of Supplementary Notes 1 to 11,

among the plurality of base station apparatuses, some base station apparatuses whose communicable distances of the light communication are shorter than a communicable distance of a different base station apparatus are each configured to transmit a light signal that gives a notification of a probability that an outside of a communication area of the corresponding one of the some base station apparatuses is a coverage hole, and

a terminal apparatus having received the light signal is configured to perform control to maintain the terminal apparatus in a communication area or control to return the terminal apparatus to a communication area when the terminal apparatus moves from the communication area to a coverage hole.

Supplementary Note 13

In the light communication system described in any one of Supplementary Notes 1 to 12,

among the plurality of base station apparatuses, a target base station apparatus whose inter-base station distance is to be changed is configured to transmit a first light signal that gives a notification of a change of the inter-base station distance, and

the terminal apparatus having received the light signal is configured to transmit, to the target base station apparatus, a second light signal indicating whether to permit the change of the inter-base station distance.

Cross-Reference to Related Applications

The present application claims priority to Japanese Patent Application Nos. 2022-134686 (filed on August 26, 2022) and 2022-171108 (filed on October 26, 2022), the contents of which are incorporated herein by reference in their entirety.

REFERENCE SIGNS

1: Light communication system
2a: Inner surface
10: Network
100: Terminal apparatus
101: Light communicator
110: Light receiver
111: Light receiving element
112: Receiver
120: Light emitter
121: Light emitting element
122: Transmitter
130: Controller
131: Processor
132: Memory
140: Mechanism portion
150: Housing
160: Cable
200: Base station apparatus
201: Light communicator
210: Light receiver
211: Light receiving element
212: Receiver
220: Light emitter
221: Light emitting element
222: Transmitter
230: Controller
231: Processor
232: Memory
240: Backhaul communicator
241: Network communicator
242: Inter-base station communicator

250: Housing
260: Hook portion
261: Rope
262: Cable
263: Laser communication device
264: Connecting member
265: Adjustment mechanism
300: Base station group
310: Floating member
311: Movement mechanism
312: Antenna
320: Weight member
321: Movement mechanism
400: Control apparatus
410: Communication distance specifier
420: Inter-base station distance setter
430: Horizontal direction adjustment amount determiner
440: Dead zone adjustment amount determiner
450: Vertical direction controller
460: Horizontal direction controller
470: Horizontal direction electrical power adjuster

**Claims**

1. A light communication system comprising:

   a base station apparatus; and
   a terminal apparatus configured to perform light communication with the base station apparatus, wherein
   the base station apparatus and/or the terminal apparatus is configured to perform connection control that establishes and/or maintains light communication connection between the terminal apparatus and the base station apparatus in such a manner that communication quality of the light communication in an uplink is prioritized over communication quality of the light communication in a downlink.

2. The light communication system according to claim 1, wherein

   the terminal apparatus comprises a controller configured to estimate an uplink communication quality that is reception quality of a light signal of the uplink received by the base station apparatus from the terminal apparatus, and
   the controller is configured to use the estimated uplink communication quality for the connection control.

3. The light communication system according to claim 2, wherein

   the terminal apparatus further comprises a plurality of light communicators whose optical axes are directed toward respectively different directions, and
   the controller is configured to estimate the uplink communication quality based on reception statuses of the plurality of light communicators.

4. The light communication system according to claim 3, wherein the controller is configured to

   measure a reference signal intensity that is a reception intensity of a reference light signal in a first light communicator that receives the reference light signal from the base station apparatus,
   estimate an ambient light noise intensity that is a reception intensity of ambient light in the base station apparatus based on a reception intensity in a second light communicator different from the first light communicator, and
   estimate the uplink communication quality based on the reference signal intensity and the ambient light noise intensity.

5. The light communication system according to any one of claims 1 to 4, wherein the controller is configured to

estimate the uplink communication quality for each of a plurality of the base station apparatuses,
select, from the plurality of the base station apparatuses, a base station apparatus whose uplink communication quality satisfies a predetermined criterion, and
try to connect to the selected base station apparatus.

6. The light communication system according to any one of claims 1 to 4, wherein
the base station apparatus is configured to notify the terminal apparatus of whether the base station apparatus performs the connection control that prioritizes the communication quality of the uplink.

7. The light communication system according to any one of claims 1 to 4, wherein the base station apparatus is configured to

configure the terminal apparatus to transmit, to the base station apparatus, a measurement report message comprising information indicating the estimated uplink communication quality, and
determine a handover of the terminal apparatus from the base station apparatus to a different base station apparatus based on the measurement report message from the terminal apparatus.

8. The light communication system according to any one of claims 1 to 4, wherein
the base station apparatus is configured to notify, during handover processing of the terminal apparatus from the base station apparatus to a different base station apparatus, the different base station apparatus of that the terminal apparatus is performing uplink prioritization connection.

9. A terminal apparatus comprising:

a light communicator configured to perform light communication with a base station apparatus; and
a controller configured to perform connection control that establishes and/or maintains light communication connection between the terminal apparatus and the base station apparatus in such a manner that communication quality of the light communication in an uplink is prioritized over communication quality of the light communication in a downlink.

10. A base station apparatus comprising:

a light communicator configured to perform light communication with a terminal apparatus; and
a controller configured to perform connection control that establishes and/or maintains light communication connection between the terminal apparatus and the base station apparatus in such a manner that communication quality of the light communication in an uplink is prioritized over communication quality of the light communication in a downlink.

11. A light communication system configured to perform light communication between a base station apparatus and a terminal apparatus, the light communication system comprising

a plurality of base station apparatuses that are three-dimensionally arranged underwater at intervals in a horizontal direction and a vertical direction, wherein
a communication area formed underwater by each of the plurality of base station apparatuses is configured to form a coverage area of the light communication in the light communication system.

12. The light communication system according to claim 11, wherein
when the communication area formed by each of the plurality of base station apparatuses is regarded as a cubic shape, the plurality of base station apparatuses are arranged underwater such that the communication area in the cubic shape is aligned in the horizontal direction and the vertical direction to fill the coverage area.

13. The light communication system according to claim 11, wherein

the plurality of base station apparatuses are configured to constitute a plurality of base station groups arranged at intervals in the horizontal direction, and
each of the plurality of base station groups comprises

two or more base station apparatuses arranged at intervals in the vertical direction, and

a connecting member provided between base station apparatuses whose communication areas are adjacent in the vertical direction and configured to connect the base station apparatuses in the vertical direction.

14. The light communication system according to claim 13, wherein
the plurality of base station apparatuses are arranged underwater such that an inter-base station distance in the horizontal direction is a predetermined distance shorter than an inter-base station distance in the vertical direction.

15. The light communication system according to claim 13, further comprising:

a specifier configured to specify a communicable distance of light communication of base station apparatuses configured to constitute a base station apparatus pair by performing light communication between the base station apparatuses configured to constitute the base station apparatus pair, the base station apparatuses whose communication areas being adjacent in the vertical direction; and
a setter configured to configure an inter-base station distance in each of the horizontal direction and the vertical direction based on the specified communicable distance.

16. The light communication system according to claim 15, further comprising:

an adjustment mechanism configured to adjust a length of the connecting member; and
a first controller configured to control the adjustment mechanism based on the configured inter-base station distance in the vertical direction.

17. The light communication system according to claim 15, further comprising:

a movement mechanism configured to move at least one of the plurality of base station groups in the horizontal direction; and
a second controller configured to control the movement mechanism based on the configured distance in the vertical direction.

18. The light communication system according to claim 15, wherein the specifier is configured to

specify the communicable distance for each of the plurality of base station apparatus pairs by performing light communication between the base station apparatuses configured to constitute each of the plurality of base station apparatus pairs, the base station apparatuses whose communication areas being adjacent in the vertical direction, and
specify a shortest communicable distance among the communicable distances specified for the plurality of base station apparatus pairs, and
the setter is configured to configure at least an inter-base station distance in the horizontal direction based on the specified shortest communicable distance.

19. The light communication system according to claim 18, further comprising
an electrical power adjuster configured to configure light signal transmission electrical power of the base station apparatus in the horizontal direction to be lower than light signal transmission electrical power of the base station apparatus in the vertical direction.

20. The light communication system according to any one of claims 11 to 19, wherein

among the plurality of base station apparatuses, some base station apparatuses whose communicable distances of the light communication are shorter than a communicable distance of a different base station apparatus are each configured to transmit a light signal that gives a notification of a probability that an outside of a communication area of the corresponding one of the some base station apparatuses is a coverage hole, and
a terminal apparatus having received the light signal is configured to perform control to maintain the terminal apparatus in a communication area or control to return the terminal apparatus to a communication area when the terminal apparatus moves from the communication area to a coverage hole.

21. The light communication system according to any one of claims 11 to 19, wherein

among the plurality of base station apparatuses, a target base station apparatus whose inter-base station distance is to be changed is configured to transmit a first light signal that gives a notification of a change of the inter-base station distance, and

the terminal apparatus having received the light signal is configured to transmit, to the target base station apparatus, a second light signal indicating whether to permit the change of the inter-base station distance.

FIG. 1

FIG. 2

FIG. 3

EP 4 580 086 A1

FIG. 4

EP 4 580 086 A1

FIG. 5

FIG. 6

EP 4 580 086 A1

100 TERMINAL APPARATUS

101#0

LIGHT COMMUNICATOR

110#0 LIGHT RECEIVER
111#0 LIGHT RECEIVING ELEMENT
112#0 RECEIVER

120#0 LIGHT EMITTER
121#0 LIGHT EMITTING ELEMENT
122#0 TRANSMITTER

101#1

LIGHT COMMUNICATOR

110#1 LIGHT RECEIVER
111#1 LIGHT RECEIVING ELEMENT
112#1 RECEIVER

120#1 LIGHT EMITTER
121#1 LIGHT EMITTING ELEMENT
122#1 TRANSMITTER

...

130 CONTROLLER
131 PROCESSOR
132 MEMORY

140 MECHANISM PORTION

FIG. 7

FIG. 8

FIG. 9

EP 4 580 086 A1

FIG. 10

## FIG. 11

EP 4 580 086 A1

FIG. 12

WATER SURFACE

UNDERWATER

200a

201a

UL LIGHT SIGNAL

100

101a

101b

200b

201b

UL LIGHT SIGNAL

FIG. 13

FIG. 14

FIG. 15

FIG. 16

FIG. 17

START

MEASURE REFERENCE SIGNAL INTENSITY IN LIGHT COMMUNICATOR THAT RECEIVES REFERENCE LIGHT SIGNAL — S1

MEASURE RECEPTION INTENSITY IN LIGHT COMMUNICATOR ON OPPOSITE SIDE TO LIGHT COMMUNICATOR THAT RECEIVES REFERENCE LIGHT SIGNAL — S2

ESTIMATE AMBIENT LIGHT NOISE INTENSITY IN BASE STATION APPARATUS — S3

ESTIMATE UL COMMUNICATION QUALITY BASED ON REFERENCE SIGNAL INTENSITY AND AMBIENT LIGHT NOISE INTENSITY — S4

IS THERE DIFFERENT LIGHT COMMUNICATOR THAT RECEIVES REFERENCE SIGNAL FROM DIFFERENT BASE STATION APPARATUS? — S5    YES

NO

RANK UL COMMUNICATION QUALITY — S6

DETERMINE CONNECTION DESTINATION — S7

CONNECTION PROCESSING — S8

END

EP 4 580 086 A1

FIG. 18

EP 4 580 086 A1

FIG. 19

START

MEASURE REFERENCE SIGNAL INTENSITY IN LIGHT
COMMUNICATOR THAT RECEIVES REFERENCE LIGHT SIGNAL — S1

MEASURE RECEPTION INTENSITY IN LIGHT COMMUNICATOR ON OPPOSITE
SIDE TO LIGHT COMMUNICATOR THAT RECEIVES REFERENCE LIGHT SIGNAL — S2

ESTIMATE AMBIENT LIGHT NOISE INTENSITY IN BASE STATION APPARATUS — S3

NO ◁———— SHIELDED STATE? ————▷ S11

│YES

MODIFY AMBIENT LIGHT NOISE INTENSITY — S12

ESTIMATE UL COMMUNICATION QUALITY BASED ON REFERENCE
SIGNAL INTENSITY AND AMBIENT LIGHT NOISE INTENSITY — S4

IS THERE DIFFERENT LIGHT COMMUNICATOR THAT RECEIVES REFERENCE
LIGHT SIGNAL FROM DIFFERENT BASE STATION APPARATUS? — S5   NO

│YES

RANK UL COMMUNICATION QUALITY — S6

DETERMINE CONNECTION DESTINATION — S7

CONNECTION PROCESSING — S8

END

# FIG. 20

FIG. 21

FIG. 22

200 — BASE STATION APPARATUS

100 — TERMINAL APPARATUS

S31 — BROADCAST INFORMATION: UL PRIORITIZATION CONNECTION OK

S32 — REFERENCE LIGHT SIGNAL

S33 — DETERMINE UL PRIORITIZATION CONNECTION

S34 — CONNECTION REQUEST (INCLUDING UL PRIORITIZATION CONNECTION INFORMATION)

S35 — CONNECTION ESTABLISHED

FIG. 23

EP 4 580 086 A1

y (HORIZONTAL DIRECTION)

x (HORIZONTAL DIRECTION)

━━━ :CONNECTING MEMBER
264

200
(0,2,0)

200
(2,2,0)

z
(VERTICAL DIRECTION)

200
(0,0,0)

200
(2,0,0)

200
(2,2,2)

200
(0,0,2)

200
(2,0,2)

# FIG. 24

**FIG. 25**

FIG. 26

FIG. 27

FIG. 28

FIG. 29

FIG. 30

CONTROL APPARATUS 400

COMMUNICATION DISTANCE SPECIFIER 410

INTER-BASE STATION DISTANCE SETTER 420

HORIZONTAL DIRECTION ADJUSTMENT AMOUNT DETERMINER 430

DEAD ADJUSTMENT AMOUNT DETERMINER 440

VERTICAL DIRECTION CONTROLLER 450

HORIZONTAL DIRECTION CONTROLLER 460

FIG. 31

FIG. 32

$$a = \frac{2}{\sqrt{3}} r$$

200a

200b

FIG. 33

WATER SURFACE

UNDERWATER

200

$\alpha$

FIG. 34

a-Δ

a-Δ

y
(HORIZONTAL DIRECTION)

x (HORIZONTAL DIRECTION)

α

# FIG. 35

START

PERFORM COMMUNICATION BETWEEN BASE STATIONS IN VERTICAL DIRECTION, AND MEASURE COMMUNICATION DISTANCE (RADIUS r) —— S51

SPECIFY INTER-BASE STATION DISTANCE (DISTANCE a) BASED ON COMMUNICATION DISTANCE, ADJUST CONNECTION WIRE LENGTH, AND ADJUST INTER-BASE STATION DISTANCE —— S52

DETERMINE HORIZONTAL DIRECTION ADJUSTMENT AMOUNT (Δ) BASED ON ENVIRONMENTAL INFORMATION (SUCH AS WAVE), AND CALCULATE INTER-BASE STATION DISTANCE (a - Δ) IN HORIZONTAL DIRECTION —— S53

DETERMINE DEAD ZONE ADJUSTMENT AMOUNT (α) ACCORDING TO INSTALLATION POSITION IN HORIZONTAL DIRECTION, AND ADJUST INTER-BASE STATION DISTANCE —— S54

END

# FIG. 36

EP 4 580 086 A1

WATER SURFACE

UNDERWATER

200a

COMMUNICATION DISTANCE r

200b

DEAD ZONE

200c

COMMUNICATION DISTANCE r' (< r)

BOTTOM OF WATER

FIG. 37

FIG. 38

WATER SURFACE

UNDERWATER

INTER-BASE STATION
DISTANCE BASED ON r'
(HORIZONTAL DIRECTION)

200a

COMMUNICATION DISTANCE r

INTER-BASE STATION
DISTANCE BASED ON r
(VERTICAL DIRECTION)

200b

200c

COMMUNICATION DISTANCE r' (< r)

BOTTOM OF WATER

FIG. 39

EP 4 580 086 A1

400

CONTROL APPARATUS

410

COMMUNICATION
DISTANCE SPECIFIER

420

INTER-BASE STATION
DISTANCE SETTER

430

HORIZONTAL DIRECTION
ADJUSTMENT AMOUNT
DETERMINER

440

DEAD ADJUSTMENT
AMOUNT DETERMINER

450

VERTICAL DIRECTION
CONTROLLER

460

HORIZONTAL
DIRECTION CONTROLLER

470

HORIZONTAL DIRECTION
ELECTRICAL POWER
ADJUSTER

FIG. 40

EP 4 580 086 A1

## FIG. 41

EP 4 580 086 A1

FIG. 42

FIG. 43

## INTERNATIONAL SEARCH REPORT

| International application No. |
|---|
| **PCT/JP2023/029025** |

| A. | CLASSIFICATION OF SUBJECT MATTER |
|---|---|

***H04B 10/11***(2013.01)i; ***H04B 10/80***(2013.01)i; ***H04W 36/30***(2009.01)i; ***H04W 48/16***(2009.01)i; ***H04W 76/10***(2018.01)i; ***H04W 84/00***(2009.01)i; ***H04W 88/02***(2009.01)i

FI: H04B10/11; H04W76/10; H04W36/30; H04W84/00 110; H04W88/02 150; H04B10/80; H04W48/16 132

According to International Patent Classification (IPC) or to both national classification and IPC

| B. | FIELDS SEARCHED |
|---|---|

Minimum documentation searched (classification system followed by classification symbols)

H04B10/11; H04B10/80; H04W36/30; H04W48/16; H04W76/10; H04W84/00; H04W88/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | US 2015/0349881 A1 (CISCO TECHNOLOGY INC.) 03 December 2015 (2015-12-03) | 1-10 |
| A | JP 9-93196 A (SHARP CORP.) 04 April 1997 (1997-04-04) | 1-10 |
| A | JP 2019-54508 A (COMMISSARIAT A L'ENERGIE ATOMIQUE ET AUX ENERGIES ALTERNATIVES) 04 April 2019 (2019-04-04) | 1-10 |
| A | US 2021/0099228 A1 (THE REGENTS OF THE UNIVERSITY OF CALIFORNIA) 01 April 2021 (2021-04-01) | 11-21 |
| A | CN 105515680 A (JINAN UNIVERSITY) 20 April 2016 (2016-04-20) | 11-21 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **11 October 2023** | **24 October 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

International application No.

**PCT/JP2023/029025**

| Box No. III | Observations where unity of invention is lacking (Continuation of item 3 of first sheet) |
| --- | --- |

This International Searching Authority found multiple inventions in this international application, as follows:

(Invention 1) Claims 1-10
Claims 1-10 have the special technical feature wherein "at least one of the base station device and the terminal device performs connection control for establishing and/or maintaining optical communication connection between the terminal device and the base station device such that the communication quality of the optical communication in the uplink is prioritized over the communication quality of the optical communication in the downlink"; thus these claims are classified as invention 1.
(Invention 2) Claims 11-21
Claims 11-21 cannot be said to have the same or corresponding special technical features between these claims and claim 1 classified as invention 1.
In addition, claims 11-21 do not depend from claim 1. Furthermore, claims 11-21 are not substantially identical to or similarly closely related to any of the claims classified as invention 1.
Accordingly claims 11-21 cannot be identified as invention 1.
Meanwhile, claims 11-21 have the special technical feature of "providing multiple base station devices disposed underwater three-dimensionally with space therebetween in a horizontal direction and a vertical direction, wherein a communication area formed underwater by each of the base station devices constitutes a coverage area for optical communication in the optical communication system"; thus these claims are classified as invention 2.

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest** ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (January 2015)

## INTERNATIONAL SEARCH REPORT
Information on patent family members

International application No.

**PCT/JP2023/029025**

| Patent document cited in search report | | | Publication date (day/month/year) | Patent family member(s) | | | Publication date (day/month/year) |
|---|---|---|---|---|---|---|---|
| US | 2015/0349881 | A1 | 03 December 2015 | WO | 2015/183416 | A1 | |
| | | | | CN | 106464360 | A | |
| JP | 9-93196 | A | 04 April 1997 | (Family: none) | | | |
| JP | 2019-54508 | A | 04 April 2019 | US | 2019/0028193 | A1 | |
| | | | | EP | 3432487 | A1 | |
| | | | | FR | 3069401 | A1 | |
| | | | | KR | 10-2019-0010488 | A | |
| US | 2021/0099228 | A1 | 01 April 2021 | WO | 2019/204319 | A1 | |
| CN | 105515680 | A | 20 April 2016 | (Family: none) | | | |

Form PCT/ISA/210 (patent family annex) (January 2015)

**EP 4 580 086 A1**

### Patent documents cited in the description

- JP 4103232 A
- JP 2022134686 A
- JP 2022171108 A